# EUROPEAN PATENT APPLICATION

(11) **EP 2 658 251 A1**
(43) Date of publication of application: **30.10.2013**
(21) Application number: 12741921.6
(22) Date of filing: 31.01.2012
(51) Int. Cl.: H04N 7/173, H04B 1/16, H04H 60/14

(54) **RECEIVING DEVICE, BROADCASTING SYSTEM AND PROGRAM**

(30) Priority: 31.01.2011 JP 2011018262; 10.02.2011 JP 2011027608; 18.05.2011 JP 2011111343; 18.05.2011 JP 2011111344; 18.05.2011 JP 2011111454; 18.05.2011 JP 2011111606; 18.05.2011 JP 2011111671
(71) Applicant: Nippon Hoso Kyokai, Tokyo 150-8001 (JP)
(72) Inventor: OHMATA, Hisayuki, Tokyo 157-8510 (JP); OTSUKI, Kazuhiro, Tokyo 157-8510 (JP); MAJIMA, Keigo, Tokyo 157-8510 (JP); FUJII, Arisa, Tokyo 157-8510 (JP); INOUE, Tomoyuki, Tokyo 157-8510 (JP)
(74) Representative: Tischner, Oliver
(86) International application number: PCT/JP2012/052134
(87) International publication number: WO 2012/105552

(57) **Abstract**

A receiving device includes: a policy data storing unit configured to store a policy level table and an output determination table, the policy level table indicating, for each content, a policy level representing a level of a method of displaying windows for a broadcast and an application, and the output determination table indicating, for each policy level, a method of displaying windows for a broadcast and an application; an application execution unit configured to execute an application; a broadcast receiving unit configured to receive a broadcast signal; a policy level comparing unit configured to read from the policy level table stored in the policy data storing unit, a policy level associated with the content included in the broadcast signal received by the broadcast receiving unit; and a policy mediation unit configured to read from the output determination table stored in the policy data storing unit, the method of displaying the windows associated with the policy level read by the policy level comparing unit, and instruct, in accordance with the read method of displaying the windows, to display a window for the content included in the broadcast signal and a window for the application being executed by the application execution unit.

## Description

### TECHNICAL FIELD

The present invention relates to a receiving device, a broadcasting system and a program.
Priority is claimed on Japanese Patent Application No. 2011-018262 filed January 31, 2011, Japanese Patent Application No. 2011-027608 filed February 10, 2011, Japanese Patent Application No. 2011-111343 filed May 18, 2011, Japanese Patent Application No. 2011-111344 filed May 18, 2011, Japanese Patent Application No. 2011-111454 filed May 18, 2011, Japanese Patent Application No. 2011-111606 filed May 18, 2011, Japanese Patent Application No. 2011-111671 filed May 18, 2011, the content of which is incorporated herein by reference.

### BACKGROUND ART

Along with recent development in digitalized broadcasting and broadband communication, research and development for implementing cooperative communication/broadcasting services, such as European HbbTV (Hybrid Broadcast Broadband TV), have been in progress. Such cooperative communication/broadcasting services are considered to deliver content using different transmission paths such as broadcasting and communication, and simultaneously display windows for those delivered multiple content on receiving devices, such as digital televisions, personal computers, and mobile terminals. For example, it is assumed that with use of application programs such as widgets (or gadgets) or browsers, communication content such as character information and motion pictures, which are delivered by communication, is overlay-displayed on a window for a broadcast program that is content delivered by broadcasting.

If the window for the communication content is freely overlay-displayed on the window for the broadcast program, however, part or all of the window for the broadcast program is covered by the window for the communication content, thus causing a possibility that the performance intent of a program producer, such as a display structure and a program structure, will not be delivered to viewers. Further, there is also a possibility that emergent information that is important for viewers, such as earthquake emergency warning, will not be delivered accurately and reliably. On the other hand, it is considered that a window for communication content obtained by an application program (hereinafter referred to as "application") is overlay-displayed on or next to another window without impeding the performance intent of the broadcast program, thereby making it possible to provide more convenient and attractive services.

Patent Document 1 discloses that a facility owned by an organization that broadcasts content (broadcast program) associates control information for determining a method of displaying content with the content, and delivers the content so that a receiving device as a content display device determines a method of displaying a window for the content and a window for an application, based on that control information. Thus, multiple application windows are displayed without impeding the production intent of the program.

### CITATION LIST

### [Patent Document]

[Patent Document 1] Japanese Patent Unexamined Application, First Publication No. 2010-4498

### DISCLOSURE OF INVENTION

### Problems to be Solved by the Invention

However, the technology disclosed in Patent Document 1 has a first problem in that it is necessary to deliver, for each content to be broadcast, the control information describing a displaying method indicating how to display a window for the content and a window for each application.

Additionally, the technology disclosed in Patent Document 1 has a second problem in that a method of displaying a window for content and a window for each application is determined for each content to be broadcast, and therefore a case where emergent or breaking content, such as an earthquake emergency warning and breaking news, is not taken into account.

The present invention has been made in view of the first problem and has a first object that is to provide a receiving device, a broadcasting system and a program, which can control display of a window for content and a window for an application without delivering control information for each content to be broadcast.

Additionally, the present invention has been made in view of the second problem and has a second object that is to provide a receiving device, a broadcasting system and a program, which can control display of a window for content and a window for an application according to emergent content to be broadcast in a case where emergent or breaking content is broadcast.

### Means for Solving the Problems

[1] A receiving device according to a first aspect of the present invention includes: a policy data storing unit configured to store a policy level table and an output determination table, the policy level table indicating, for each content, a policy level representing a level of a method of displaying windows for a broadcast and an application, and the output determination table indicating, for each policy level, a method of displaying windows for a broadcast and an application; an application execution unit configured to execute an application; a broadcast receiving unit configured to receive a broadcast signal; a policy level comparing unit configured to read from the policy level table stored in the policy data storing unit, a policy level associated with the content included in the broadcast signal received by the broadcast receiving unit; and a policy mediation unit configured to read from the output determination table stored in the policy data storing unit, the method of displaying the windows associated with the policy level read by the policy level comparing unit, and instruct, in accordance with the read method of displaying the windows, to display a window for the content included in the broadcast signal and a window for the application being executed by the application execution unit.

According to this aspect, the receiving device refers to the previously-stored policy level table to determine a policy level associated with the content included in the received broadcast signal. The receiving device further refers to the previously-stored output determination table to determine a method of displaying windows for a broadcast and an application which is associated with the policy level. In accordance with the determined window outputting method, the receiving device controls a display of the window for the content included in the broadcast signal and the window for the application being executed.
Thus, even in a case where control information for each content is not delivered, the receiving device can control the display of the window for the content broadcast and the window for the application to be executed by the receiving device. Accordingly, it is possible to control, in accordance with the performance intent of the content to be broadcast by a broadcasting organization, whether or not to display the window for the application. If it is allowed to display the window for the application, it is possible to control whether to overlay-display the window for the application on the window for content or to display the window for the application next to the window for the content, and the like. Additionally, it is not necessary to deliver to the receiving device, control information for each content to be broadcast, and therefore it is not necessary to change a conventional broadcast signal. Accordingly, this aspect can be implemented without improving facilities on the broadcasting organization side.

[2] Regarding the first aspect of the present invention, the content may be general content to be broadcast in accordance with a predetermined schedule. The policy level comparing unit may be configured to receive data indicating broadcast start time of the general content, and read a policy level associated with the general content from the policy level table. The policy mediation unit may be configured to change, at the broadcast start time indicated by the data received by the policy level comparing unit, the policy level present before the broadcast start time to the policy level of the general content associated with the data indicating the broadcast start time.
   According to this aspect, at the broadcast start time indicated by the data indicating the broadcast start time, the receiving device controls a display of the windows for the broadcast program and the application in accordance with the window outputting method associated with the policy level of the broadcast program that starts at that time.
   Thus, the receiving device can control the display of the application in accordance with the start time of the broadcast program, using information such as an electronic program guide, which is acquired by arbitrary means such as communication or broadcasting.

[3] Regarding the first aspect of the present invention, the content may be emergent content to be broadcast in non-synchronization with general content to be delivered in accordance with a predetermined schedule. The receiving device may further include an event interpretation unit configured to detect that emergent content is included in the broadcast signal, and output an occurrence of the emergent content to the policy level comparing unit. The policy level comparing unit may be configured to read from the policy level table stored in the policy data storing unit, a policy level associated with the emergent content, the occurrence of which is detected by the event interpretation unit.
   According to this aspect, in a case where it is detected that emergent content is included in the broadcast signal, the receiving device controls the output of the broadcast program and the output of the application by the outputting method associated with the policy level of the emergent content.
   Thus, the receiving device can prohibit the window for the application from being displayed in a case where emergent or breaking information, such as an earthquake emergency warning or breaking news, which is delivered irrespective of the previously scheduled broadcast program, is received. Accordingly, it is possible to make it easier to deliver important information to viewers.

[4] Regarding the first aspect of the present invention, the content may be any one of general content to be broadcast in accordance with a predetermined schedule and emergent content to be broadcast in non-synchronization with the general content. The receiving device may further include an event interpretation unit configured to detect that emergent content is included in the broadcast signal, and output an occurrence of the emergent content to the policy level comparing unit. The policy level comparing unit may be configured to read from the policy level table, a policy level associated with the general content included in the broadcast signal, and read from the policy level table, a policy level in association with the emergent content in a case that the event interpretation unit detects an occurrence of the emergent content. The policy mediation unit may be configured to read from the output determination table, a method of displaying windows associated with the policy level of the general content in a case that the emergent content is not occurring. The policy mediation unit is configured to, in a case that the emergent content is occurring, read from the output determination table, a method of displaying windows associated with the policy level of the emergent content, or compare the policy level of the emergency content and the policy level of the general content, read from the output determination table a method of displaying windows associated with a greater one of the compared policy levels, and instruct, in accordance with the read method of displaying windows, to display a window for the content included in the broadcast signal and a window for the application being executed by the application execution unit.

According to this aspect, the receiving device generally controls the display of the broadcast program and the application by the window outputting method associated with the policy level of the broadcast program. In a case where emergent content is broadcast, the receiving device controls the display of the broadcast program and the application by the outputting method associated with the policy level of the emergent content or by the outputting method associated with a greater one of the policy level of the emergent content and the policy level of the broadcast program.
Thus, in a case where while an attractive broadcast program in conjunction with an application is provided to viewers, it becomes necessary to deliver emergent or breaking information during that broadcast program on the air, the receiving device can display that important information in a way such that the viewers can easily receive that information. Additionally, even in a case where emergent content occurs, if a broadcast program to deliver important information is on the air, the receiving device can continue to display the information provided in that broadcast program in a way such that the viewers can easily receive that information.

[5] Regarding the first aspect of the present invention, the receiving device may further include a policy data management unit configured to obtain from the broadcast signal received by the broadcast receiving unit, an output determination table transmitted in a section system, engineering service, or a data carousel system, and write the output determination table in the policy data storing unit.
   According to this aspect, the receiving device acquires from the broadcast signal, the output determination table to be commonly used for each content.
   Thus, only in a case where there is a change in the window displaying method associated with the policy level, the output determination table is transmitted by means of a broadcast signal, thereby making it possible to control the window displaying method for the receiving device as intended by the broadcasting organization.

[6] Regarding the first aspect of the present invention, the receiving device may further include: a communication input output unit configured to transmit and receive data via a network; and a policy data management unit configured to obtain from the broadcast signal received by the broadcast receiving unit, storing destination information that specifies an output determination table storing device to be connected to the network, and write in the policy data storing unit, the output determination table that the communication input and output unit receives from the output determination table storing device specified by the storing destination information.
   According to this aspect, the receiving device refers to the previously-stored policy level table to determine the policy level associated with the content included in the received broadcast signal. Further, the receiving device refers to the previously-stored output determination table to determine a method of outputting windows for the broadcast and the application, which is associated with the determined policy level. In accordance with the determined window outputting method, the receiving device controls the display of the window for the content included in the broadcast signal and the window for the application being executed.

Thus, even in a case where control information for each content is not delivered, the receiving device can control the window for the content broadcast and the window for the application executed by the receiving device. Accordingly, it is possible to control, in accordance with the performance intent of the content to be broadcast by a broadcasting organization, whether or not to display the window for the application. If it is allowed to display the window for the application, it is possible to control whether to overlay-display the window for the application on the window for content or to display the window for the application next to the window for the content, and the like. Additionally, it is not necessary to deliver to the receiving device, control information for each content to be broadcast, and therefore it is not necessary to change a conventional broadcast signal. Accordingly, this aspect can be implemented without improving facilities on the broadcasting organization side.
Further, the receiving device acquires from the storing destination communicated by the broadcast signal, the output determination table to be commonly used for each content. Therefore, only in a case where there is a change in the window displaying method associated with the policy level, the information concerning the storing destination of the output determination table is transmitted by means of the broadcast signal, thereby making it possible to control the window displaying method for the receiving device as intended by the broadcasting organization.

[7] Regarding the first aspect of the present invention, the policy data storing unit may be configured to further store version data of the output determination table. The version data of the output determination table may be added to the storing destination information. The policy data management unit may be configured to, in a case that the version data of the output determination table obtained from the broadcast signal indicates a version newer than indicated by the version data stored in the policy data storing unit, update the output determination table and the version data which are stored in the policy data storing unit with the output determination table that the communication input and output device receives from the output determination table specified by the storing destination information, and the version data added to the storing destination information.
   According to this aspect, in a case where the information concerning the storing destination of the output determination table with the new version is received by broadcasting, the receiving device acquires the output determination table from the storing destination, and updates the stored output determination table with the acquired output determination table.
   Thus, it is possible to update the output determination table only in a case where an update is necessary. Additionally, it is possible to prevent the stored output determination table from being updated with an output determination table with the old version.

[8] Regarding the first aspect of the present invention, the receiving device may further include a policy data management unit configured to write in the policy data storing unit, an output determination table obtained from the broadcast signal received from the broadcast receiving unit, or an output determination table received by a communication unit configured to data transmitted via a network.
   According to this aspect, the receiving device refers to the previously-stored policy level table to determine a policy level associated with the content included in the received broadcast signal. The receiving device further refers to the previously-stored output determination table to determine the method of displaying the windows for the broadcast and the application, which is associated with the policy level. In accordance with the determined window outputting method, the receiving device controls the display of the window for the content included in the broadcast signal and the window for the application being executed.

Thus, even in a case where control information for each content is not delivered, the receiving device can control the display of the window for the content broadcast and the window for the application to be executed by the receiving device. Accordingly, it is possible to control, in accordance with the performance intent of the content to be broadcast by a broadcasting organization, whether or not to display the window for the application. If it is allowed to display the window for the application, it is possible to control whether to overlay-display the window for the application on the window for content or to display the window for the application next to the window for the content, and the like. Additionally, it is not necessary to deliver to the receiving device, control information for each content to be broadcast, and therefore it is not necessary to change a conventional broadcast signal. Accordingly, this aspect can be implemented without improving facilities on the broadcasting organization side.
Further, the receiving device acquires by broadcasting or communication, the output determination table to be commonly used for each content. Therefore, only in a case where there is a change in the window displaying method associated with the policy level, the output determination table is transmitted by means of the broadcast signal, thereby making it possible to control the window displaying method for the receiving device as intended by the broadcasting organization.

[9] Regarding the first aspect of the present invention, the policy data storing unit may be configured to further store version data. Version data may be added to the output determination table. The policy data management unit may be configured to, in a case that the version data added to the output determination table obtained from the broadcast signal or the output determination table received by the communication unit indicates a version newer than indicated by the version data stored in the policy data storing unit, update the output determination table and the version data which are stored in the policy data storing unit with the output determination table obtained from the broadcast signal or the output determination table received by the communication unit, and the version data added to the output determination table.
   According to this aspect, upon receiving by broadcasting or communication, the output determination table with a new version, the receiving device updates the stored output determination table.
   Thus, it is possible to update the output determination table only in a case where an update is necessary. Additionally, it is possible to prevent the stored output determination table from being updated with an output determination table with the old version.

[10] Regarding the first aspect of the present invention, the receiving device may further include an application control unit is configured to, in a case that a control code indicating a force-quit of all applications is set to the broadcast signal received by the broadcast receiving unit, terminate all the applications being executed by the application execution unit.
   According to this aspect, the receiving device refers to the previously-stored policy level table to determine a policy level associated with the content included in the received broadcast signal. The receiving device further refers to the previously-stored output determination table to determine the method of displaying the windows for the broadcast and the application, which is associated with the policy level. In accordance with the determined window outputting method, the receiving device controls the display of the window for the content included in the broadcast signal and the window for the application being executed. Then, in a case where the control code indicating a force-quit of all applications is received by means of a broadcast signal, the receiving device terminates all the applications being executed by the application execution unit.

Thus, even in a case where control information for each content is not delivered, the receiving device can control the display of the window for the content broadcast and the window for the application to be executed by the receiving device. Accordingly, it is possible to control, in accordance with the performance intent of the content to be broadcast by a broadcasting organization, whether or not to display the window for the application. If it is allowed to display the window for the application, it is possible to control whether to overlay-display the window for the application on the window for content or to display the window for the application next to the window for the content, and the like. Regarding this control, it is not necessary to deliver to the receiving device, control information for each content to be broadcast, and therefore it is not necessary to change a conventional broadcast signal. Accordingly, this aspect can be implemented without improving facilities on the broadcasting organization side.
Further, in a case where the control code indicating a force-quit of all applications is set to the broadcast signal, the receiving device terminates all the applications being executed by the application execution unit. Therefore, in such a case where emergent content occurs, the broadcasting organization side instructs, by the broadcast signal, to terminate of all the applications being currently executed. Thus, it is possible to control the receiving device to terminate windows for all the applications displayed on the receiving device and to display only a window for the content (broadcast program).

[11] Regarding the first aspect of the present invention, the receiving device may further include an event interpretation unit configured to detect that emergent content is included in the broadcast signal, the emergent content being content to be broadcast in non-synchronization with general content, and the general content being content to be broadcast in accordance with a predetermined schedule. The policy level comparing unit may be configured to read from the policy level table, a policy level associated with the general content included in the broadcast signal, and read from the policy level table, a policy level in association with the emergent content in a case that the event interpretation unit detects an occurrence of the emergent content. The policy mediation unit may be configured to read from the output determination table, a method of displaying windows associated with the policy level of the general content in a case that the emergent content is not occurring. The policy mediation unit may be configured to, in a case that the emergent content is occurring, read from the output determination table, a method of displaying windows associated with the policy level of the emergent content, and instruct, in accordance with the read method of displaying windows, to display a window for the content included in the broadcast signal and a window for the application being executed by the application execution unit.

Thus, even in a case where control information for each content is not delivered, the receiving device can control the display of the window for the content broadcast and the window for the application to be executed by the receiving device. Accordingly, it is possible to control, in accordance with the performance intent of the content to be broadcast by a broadcasting organization, whether or not to display the window for the application. If it is allowed to display the window for the application, it is possible to control whether to overlay-display the window for the application on the window for content or to display the window for the application next to the window for the content, and the like. Additionally, it is not necessary to deliver to the receiving device, control information for each content to be broadcast, and therefore it is not necessary to change a conventional broadcast signal. Accordingly, this aspect can be implemented without improving facilities on the broadcasting organization side.
Further, in a case where emergent or breaking content is broadcast while the general content to be broadcast in accordance with the predetermined schedule is on the air, it is possible to control, in accordance with the emergent content to be broadcast, the display of the window for the content and the window for the application. In other words, in a case where while an attractive broadcast program in conjunction with an application is provided to viewers, it becomes necessary to deliver emergent or breaking information during that broadcast program on the air, it is possible to display that important information in a way such that the viewers can easily receive that information.

[12] Regarding the first aspect of the present invention, the policy level comparing unit may be configured to read a policy level from the broadcast signal in a case that a policy level is set to the broadcast signal. The policy mediation unit may be configured to, in a case that the emergent content is not occurring and a policy level is set to the broadcast signal, read from the output determination table, a method of displaying windows associated with the policy level set to the broadcast signal. The policy mediation unit may be configured to, in a case that the emergent content is not occurring and a policy level is not set to the broadcast signal, read from the output determination table, a method of displaying windows associated with the policy level of the general content, and instruct, in accordance with the read method of displaying windows, to display a window for the content included in the broadcast signal and a window for the application being executed by the application execution unit.

According to this aspect, in a case where emergent content is broadcast, the receiving device controls the display of the broadcast program and the application by the outputting method associated with the policy level of the emergent content. Then, in a case that the emergent content is not broadcast and a policy level is set to the broadcast signal, the receiving device prioritizes the policy level set to the broadcast signal over the policy level of the general content. Then, the receiving device controls the display of the broadcast program and the application by the outputting method associated with the policy level set to the broadcast signal.
Thus, the policy level is set to the broadcast signal in accordance with the progress of the broadcast program, thereby making it possible to control the display of the application in accordance with the progress of the broadcast program, based on the intent of the broadcasting organization.

[13] Regarding the first aspect of the present invention, the policy level comparing unit may be configured to read the policy level from any one of a program map table, an application information table, and an event information table. The policy mediation unit may be configured to arrange the program map table, the application information table, and the event information table in this order that is a descending order of priority thereof. The policy mediation unit is configured to, in a case that the emergent content is not occurring and the policy level comparing unit reads the policy level from two or more different tables included in the broadcast signal, read from the output determination table, a method of displaying windows associated with the policy level of the table with high priority, and instruct, in accordance with the read method of displaying windows, to display a window for the content included in the broadcast signal and a window for the application being executed by the application execution unit.

According to this aspect, in a case where policy data is set to two or more tables included in the broadcast signal (a program map table, an application information table, and an event information table), the receiving device preferentially performs a display control with respect to the program map table, the application information table, and the event information table in this order. The program map table is a table to be transmitted periodically and reliably. The application information table is a table to be transmitted timely. The event information table is a table to be transmitted for each broadcast program.
Thus, the program map table is prioritized over the other tables, thereby making it possible to reliably control the display of an application in accordance with the performance intent of the content broadcast by the broadcasting organization. Additionally, the application information table is prioritized over the event information table, thereby making it possible to control the display of an application in accordance with the progress of the broadcast program based on the intent of the broadcasting organization.

[14] A broadcasting system according to a second aspect of the present invention includes: a transmitting device configured to transmit a broadcast signal; and a receiving device configured to receive the broadcast signal. The transmitting device includes a broadcast transmitting unit configured to transmit a broadcast signal including content. The receiving device includes: a policy data storing unit configured to store a policy level table and an output determination table, the policy level table indicating, for each content, a policy level representing a level of a method of displaying windows for a broadcast and an application, and the output determination table indicating, for each policy level, a method of displaying windows for a broadcast and an application; an application execution unit configured to execute an application; a broadcast receiving unit configured to receive a broadcast signal; a policy level comparing unit configured to read from the policy level table stored in the policy data storing unit, a policy level associated with the content included in the broadcast signal received by the broadcast receiving unit; and a policy mediation unit configured to read from the output determination table stored in the policy data storing unit, the method of displaying the windows associated with the policy level read by the policy level comparing unit, and instruct, in accordance with the read method of displaying the windows, to display a window for the content included in the broadcast signal and a window for the application being executed by the application execution unit.

According to this aspect, the receiving device refers to the previously-stored policy level table to determine a policy level associated with the content included in the received broadcast signal. The receiving device further refers to the previously-stored output determination table to determine the method of displaying the windows for a broadcast and an application, which is associated with the policy level. In accordance with the determined window outputting method, the receiving device controls a display of a window for the content included in the broadcast signal and a window for the application being executed.
Thus, even in a case where control information for each content is not delivered, the receiving device can control the display of the window for the content broadcast and the window for the application to be executed by the receiving device. Accordingly, it is possible to control, in accordance with the performance intent of the content to be broadcast by a broadcasting organization, whether or not to display the window for the application. If it is allowed to display the window for the application, it is possible to control whether to overlay-display the window for the application on the window for content or to display the window for the application next to the window for the content, and the like. Additionally, it is not necessary to deliver to the receiving device, control information for each content to be broadcast, and therefore it is not necessary to change a conventional broadcast signal. Accordingly, this aspect can be implemented without improving facilities on the broadcasting organization side.

[15] Regarding the second aspect of the present invention, the receiving device may further include: a communication input output unit configured to transmit and receive data via a network; and a policy data management unit configured to obtain from the broadcast signal received by the broadcast receiving unit, storing destination information that specifies an output determination table storing device to be connected to the network, and write in the policy data storing unit, the output determination table that the communication input and output unit receives from the output determination table storing device specified by the storing destination information.
   According to this aspect, the receiving device refers to the previously-stored policy level table to determine a policy level associated with the content included in the received broadcast signal. The receiving device further refers to the previously-stored output determination table to determine the method of displaying the windows for the broadcast and the application, which is associated with the determined policy level. In accordance with the determined window outputting method, the receiving device controls the display of the window for the content included in the broadcast signal and the window for the application being executed.

Thus, even in a case where control information for each content is not delivered, the receiving device can control the display of the window for the content broadcast and the window for the application to be executed by the receiving device. Accordingly, it is possible to control, in accordance with the performance intent of the content to be broadcast by a broadcasting organization, whether or not to display the window for the application. If it is allowed to display the window for the application, it is possible to control whether to overlay-display the window for the application on the window for content or to display the window for the application next to the window for the content, and the like. Additionally, it is not necessary to deliver to the receiving device, control information for each content to be broadcast, and therefore it is not necessary to change a conventional broadcast signal. Accordingly, this aspect can be implemented without improving facilities on the broadcasting organization side.
Additionally, the receiving device acquires from the storing destination communicated by the broadcast signal, the output determination table to be commonly used for each content. Therefore, only in a case where there is a change in the window displaying method associated with the policy level, the storing destination of the output determination table is transmitted by means of the broadcast signal, thereby making it possible to control the window displaying method for the receiving device as intended by the broadcasting organization.

[16] Regarding the second aspect of the present invention, the receiving device may further include a policy data management unit configured to write in the policy data storing unit, an output determination table obtained from the broadcast signal received from the broadcast receiving unit, or an output determination table received by a communication unit configured to receive data transmitted via a network.
   According to this aspect, the receiving device refers to the previously-stored policy level table to determine a policy level associated with the content included in the received broadcast signal. The receiving device further refers to the previously-stored output determination table to determine the method of displaying the windows for the broadcast and the application, which is associated with the policy level. In accordance with the determined window outputting method, the receiving device controls the display of the window for the content included in the broadcast signal and the window for the application being executed.

Thus, even in a case where control information for each content is not delivered, the receiving device can control the display of the window for the content broadcast and the window for the application to be executed by the receiving device. Accordingly, it is possible to control, in accordance with the performance intent of the content to be broadcast by a broadcasting organization, whether or not to display the window for the application. If it is allowed to display the window for the application, it is possible to control whether to overlay-display the window for the application on the window for content or to display the window for the application next to the window for the content, and the like. Additionally, it is not necessary to deliver to the receiving device, control information for each content to be broadcast, and therefore it is not necessary to change a conventional broadcast signal. Accordingly, this aspect can be implemented without improving facilities on the broadcasting organization side.
Additionally, the receiving device acquires by broadcasting or communication, the output determination table to be commonly used for each content. Therefore, only in a case where there is a change in the window displaying method associated with the policy level, the output determination table is transmitted by means of the broadcast signal, thereby making it possible to control the window displaying method for the receiving device as intended by the broadcasting organization.

[17] Regarding the second aspect of the present invention, the receiving device may further include an application control unit is configured to, in a case that a control code indicating a force-quit of all applications is set to the broadcast signal received by the broadcast receiving unit, terminate all the applications being executed by the application execution unit.
   According to this aspect, the receiving device refers to the previously-stored policy level table to determine a policy level associated with the content included in the received broadcast signal. The receiving device further refers to the previously-stored output determination table to determine the method of displaying the windows for the broadcast and the application, which is associated with the policy level. In accordance with the determined window outputting method, the receiving device controls the display of the window for the content included in the broadcast signal and the window for the application being executed. Then, in a case where the control code indicating a force-quit of all applications is received by means of a broadcast signal, the receiving device terminates all the applications being executed by the application execution unit.

Thus, even in a case where control information for each content is not delivered, the receiving device can control the display of the window for the content broadcast and the window for the application to be executed by the receiving device. Accordingly, it is possible to control, in accordance with the performance intent of the content to be broadcast by a broadcasting organization, whether or not to display the window for the application. If it is allowed to display the window for the application, it is possible to control whether to overlay-display the window for the application on the window for content or to display the window for the application next to the window for the content, and the like. Regarding this control, it is not necessary to deliver to the receiving device, control information for each content to be broadcast, and therefore it is not necessary to change a conventional broadcast signal. Accordingly, this aspect can be implemented without improving facilities on the broadcasting organization side.
Further, in a case where the control code indicating a force-quit of all applications is set to the broadcast signal, the receiving device terminates all the applications being executed by the application execution unit. Therefore, in such a case where emergent content occurs, the broadcasting organization side instructs, by the broadcast signal, to terminate of all the applications being currently executed. Thus, it is possible to control the receiving device to terminate windows for all the applications displayed on the receiving device and to display only a window for the content (broadcast program).

[18] Regarding the second aspect of the present invention, the receiving device may further include an event interpretation unit configured to detect that emergent content is included in the broadcast signal, the emergent content being content to be broadcast in non-synchronization with general content, and the general content being content to be broadcast in accordance with a predetermined schedule. The policy level comparing unit may be configured to read from the policy level table, a policy level associated with the general content included in the broadcast signal, and read from the policy level table, a policy level in association with the emergent content in a case that the event interpretation unit detects an occurrence of the emergent content. The policy mediation unit may be configured to read from the output determination table, a method of displaying windows associated with the policy level of the general content in a case that the emergent content is not occurring. The policy mediation unit may be configured to, in a case that the emergent content is occurring, read from the output determination table, a method of displaying windows associated with the policy level of the emergent content, and instruct, in accordance with the read method of displaying windows, to display a window for the content included in the broadcast signal and a window for the application being executed by the application execution unit.

According to this aspect, the receiving device refers to the previously-stored policy level table to determine a policy level associated with the content included in the received broadcast signal. The receiving device further refers to the previously-stored output determination table to determine the method of displaying the windows for the broadcast and the application, which is associated with the policy level. In accordance with the determined window outputting method, the receiving device controls the display of the window for the content included in the broadcast signal and the window for the application being executed. Additionally, the receiving device generally controls the display of the broadcast program and the application by the window outputting method associated with the policy level of the broadcast program. In a case where emergent content is broadcast, the receiving device controls the display of the broadcast program and the application by the outputting method associated with the policy level of the emergent content.

Thus, even in a case where control information for each content is not delivered, the receiving device can control the display of the window for the broadcast and the window for the application to be executed by the receiving device. Accordingly, it is possible to control, in accordance with the performance intent of the content to be broadcast by a broadcasting organization, whether or not to display the window for the application. If it is allowed to display the window for the application, it is possible to control whether to overlay-display the window for the application on the window for content or to display the window for the application next to the window for the content, and the like. Additionally, it is not necessary to deliver to the receiving device, control information for each content to be broadcast, and therefore it is not necessary to change a conventional broadcast signal. Accordingly, this aspect can be implemented without improving facilities on the broadcasting organization side.

Further, in a case where emergent or breaking content is broadcast while the general content to be broadcast in accordance with the predetermined schedule is on the air, it is possible to control, in accordance with the emergent content to be broadcast, the display of the window for the content and the window for the application. In other words, in a case where while an attractive broadcast program in conjunction with an application is provided to viewers, it becomes necessary to deliver emergent or breaking information during that broadcast program on the air, it is possible to display that important information in a way such that the viewers can easily receive that information.

[19] A program according to a third aspect of the present invention causes a computer of a receiving device to function as: a policy data storing unit configured to store a policy level table and an output determination table, the policy level table indicating, for each content, a policy level representing a level of a method of displaying windows for a broadcast and an application, and the output determination table indicating, for each policy level, a method of displaying windows for a broadcast and an application; an application execution unit configured to execute an application; a broadcast receiving unit configured to receive a broadcast signal; a policy level comparing unit configured to read from the policy level table stored in the policy data storing unit, a policy level associated with the content included in the broadcast signal received by the broadcast receiving unit; and a policy mediation unit configured to read from the output determination table stored in the policy data storing unit, the method of displaying the windows associated with the policy level read by the policy level comparing unit, and instruct, in accordance with the read method of displaying the windows, to display a window for the content included in the broadcast signal and a window for the application being executed by the application execution unit.

[20] Regarding the third aspect of the present invention, the program may cause the computer of the receiving device to further function as a policy data management unit configured to obtain from the broadcast signal received by the broadcast receiving unit, storing destination information that specifies an output determination table storing device to be connected to the network, and write in the policy data storing unit, the output determination table that the communication input and output unit receives from the output determination table storing device specified by the storing destination information.

[21]Regarding the third aspect of the present invention, the program may cause the computer of the receiving device to further function as a policy data management unit configured to write in the policy data storing unit, an output determination table obtained from the broadcast signal received from the broadcast receiving unit, or an output determination table received by a communication unit configured to receive data transmitted via a network.

[22] Regarding the third aspect of the present invention, the program may cause the computer of the receiving device to further function as an application control unit configured to, in a case that a control code indicating a force-quit of all applications is set to the broadcast signal received by the broadcast receiving unit, terminate all the applications being executed by the application execution unit.

[23] Regarding the third aspect of the present invention, the program may cause the computer of the receiving device to further function as an event interpretation unit configured to detect that emergent content is included in the broadcast signal, the emergent content being content to be broadcast in non-synchronization with general content, and the general content being content to be broadcast in accordance with a predetermined schedule. The program may cause the policy level comparing unit to read from the policy level table, a policy level associated with the general content included in the broadcast signal, and read from the policy level table, a policy level in association with the emergent content in a case that the event interpretation unit detects an occurrence of the emergent content. The program may cause the policy mediation unit to read from the output determination table, a method of displaying windows associated with the policy level of the general content in a case that the emergent content is not occurring. The program may cause the policy mediation unit to, in a case that the emergent content is occurring, read from the output determination table, a method of displaying windows associated with the policy level of the emergent content, and instruct, in accordance with the read method of displaying windows, to display a window for the content included in the broadcast signal and a window for the application being executed by the application execution unit.

### Effects of the Invention

According to the present invention, it is possible to control a display of a window for content and a window for an application without distributing control information for each content to be broadcast. Additionally, the receiving device acquires from the storing destination communicated by broadcasting or the broadcast signal, the output determination table to be commonly used for each content. Therefore, only in a case where there is a change in the window displaying method associated with the policy level, information concerning the storing destination of the output determination table is transmitted by means of the broadcast signal, thereby making it possible for the receiving device to control the window displaying method as intended by the broadcasting organization, thus achieving the first object.

Further, according to the present invention, a display of a window for content and a window for an application is controlled without distributing control information for each content. In such a case where emergent content occurs, the broadcasting organization side instructs, by the broadcast signal, to terminate of all the applications being currently executed. Thus, it is possible to control the receiving device to terminate windows for all the applications displayed on the receiving device and to display only a window for the content (broadcast program), thus achieving the above first object.

Moreover, according to the present invention, in a case where emergent or breaking content is broadcast while the general content to be broadcast in accordance with a predetermined schedule is on the air, it is possible to control, in accordance with the emergent content to be broadcast, a display of a window for the content and a window for the application. In other words, in a case where while an attractive broadcast program in conjunction with an application is provided to viewers, it becomes necessary to deliver emergent or breaking information during that broadcast program on the air, it is possible to display that important information in a way such that the viewers can easily receive that information.

### BRIEF DESCRIPTION OF THE DRAWINGS

FIG. 1 is a diagram illustrating the entire configuration of a broadcasting system according to an embodiment of the present invention.
FIG. 2 is a diagram illustrating an example of determination of policy levels according to the embodiment.
FIG. 3A is a diagram illustrating an example of a relationship between a policy level and a method of displaying a broadcast window and an application window.
FIG. 3B is a diagram illustrating another example of a relationship between a policy level and a method of displaying a broadcast window and an application window.
FIG. 3C is a diagram illustrating still another example of a relationship between a policy level and a method of displaying a broadcast window and an application window.
FIG. 3D is a diagram illustrating still another example of a relationship between a policy level and a method of displaying a broadcast window and an application window.
FIG. 4 is a diagram illustrating functional blocks of a receiving device according to the embodiment.
FIG. 5 illustrates an example of data stored in a policy data storing unit according to the embodiment.
FIG. 6 is a diagram illustrating an example of a setting of a policy level table according to the embodiment.
FIG. 7A is a diagram illustrating a first half part of an example of a setting of a policy level table according to the embodiment.
FIG. 7B is a diagram illustrating a first half portion of an example of a setting of a policy level table according to the embodiment.
FIG. 7C is a diagram illustrating a last half portion of the setting example of a policy level table according to the embodiment.
FIG. 8 is a flowchart illustrating process flow of the receiving device according to the embodiment.
FIG. 9 is a diagram illustrating an example in which a policy level is described in PMT.
FIG. 10 is a diagram illustrating an example in which a policy level is described in AIT.
FIG. 11 is a diagram illustrating an example in which a policy level is described in EIT.
FIG. 12 is a diagram illustrating a structure of a descriptor as an application identifier.
FIG. 13 is a diagram illustrating an example of a control code for controlling a state of an application.
FIG. 14 is a diagram illustrating an example in which a control code is described in the AIT.
FIG. 15 is a block diagram illustrating an internal configuration of a receiving device in a case where a state of an application is controlled based on a control code.
FIG. 16A is a diagram illustrating an example of a method of displaying a window in accordance with an attribute of an application.
FIG. 16B is a diagram illustrating another example of a method of displaying a window in accordance with an attribute of an application.
FIG. 16C is a diagram illustrating still another example of a method of displaying a window in accordance with an attribute of an application.
FIG. 16D is a diagram illustrating still another example of a method of displaying a window in accordance with an attribute of an application.
FIG. 16E is a diagram illustrating still another example of a method of displaying a window in accordance with an attribute of an application.
FIG. 17 is a block diagram illustrating an internal configuration of a receiving device in a case where a window displaying method is determined in accordance with the attribute of an application.

### BEST MODE FOR CARRYING OUT THE INVENTION

Hereinafter, embodiments of the present invention are explained in detail with reference to drawings.

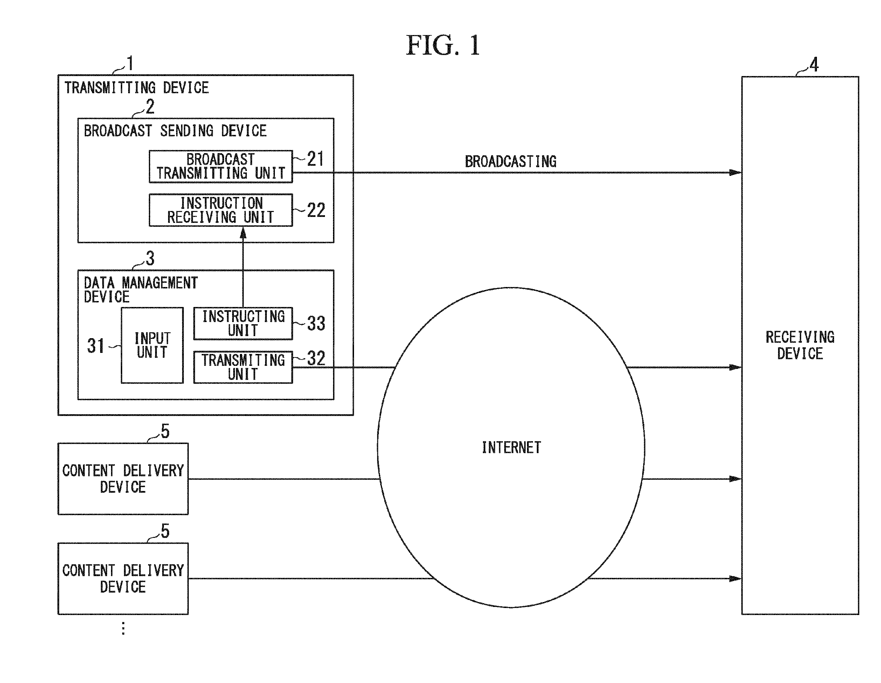

FIG. 1 is a diagram illustrating the entire configuration of a broadcasting system according to an embodiment of the present invention. A transmitting device 1 is a facility of a broadcasting organization and includes a broadcast sending device 2 and a data management device 3. Content delivery devices 5, 5, ... are devices that deliver content and are facilities provided by different organizations. The organization owing the content delivery device 5 is, for example, a broadcasting organization, a service provider, an application provider, or the like. A receiving device 4 owned by a user receives a broadcast from the broadcast sending device 2 and communicates with the data management device 3 and the content delivery device 5 via the Internet. Although only one receiving device 4 is shown in FIG. 1, multiple devices are provided.

A broadcasting system of the present embodiment implements cooperative communication/broadcasting services. There are multiple types of implementations of cooperative communication/broadcasting services. In the present embodiment, in the receiving device 4, broadcast services by ISDB (integrated services digital broadcasting) cooperate with communication services by the Internet. A user can use the cooperative communication/broadcasting services using the receiving device 4.

Broadcast signals broadcast from the broadcast sending device 2 are the same as broadcast signals of the conventional digital broadcast that is broadcast by the existing broadcast facility, and is defined by the standard of ARIB (association of radio industries and broadcast). The receiving device 4 receives a broadcast signal broadcast from the broadcast sending device 2 and executes an application program (hereinafter referred to as an "application"). The application executed by the receiving device 4 obtains content delivered by the content delivery device 5 via the Internet.

Regarding the conventionally assumed cooperative communication/broadcasting services, in a case where various applications are available to a broadcast receiving device, a window for the content obtained by the application via the Internet (hereinafter referred to as an "application window") is overlay-displayed on a window for a broadcast program (hereinafter referred to as a "broadcast window"). In the present embodiment, a method of displaying windows for a broadcast program and an application, and a method of outputting sound thereof are controlled using the broadcast signal, for each broadcast program, or in non-synchronization with the broadcast program. The window displaying method includes, for example, a method in which only a broadcast window is displayed, a method in which a broadcast window is overlay-displayed on or next to an application window, and the like. Additionally, the sound outputting method includes a method in which only sound of a broadcast program is output, a method in which sound of the broadcast program is output independently of or mixed with sound of the application.

A window displaying method and a sound outputting method which are required by a broadcasting organization is called a policy. A policy has multiple levels according to importance, performance, and the like of the contents of a broadcast program. Those levels are called policy levels. In other words, the policy level indicates the level for limiting the display of a window for an application and the output of sound of the application with respect to the display of a window for a broadcast program and the output of sound of the broadcast program. The policy level is represented by, for example, an integer value. The high policy level indicates that the level of restriction of the display of a window for an application and the output of sound of the application is high (restriction is stricter). For example, in a case where emergent or breaking content is preferentially displayed, the policy level is set to be high. Hereinafter, a window displaying method and a sound outputting method are also referred to as an "outputting method". Additionally, a broadcast program is simply referred to as a "program".

The broadcast sending device 2 is a general broadcasting facility for digital broadcast including a program making facility, a program sending facility, a transmitting facility, and the like. The broadcast sending device 2 includes a broadcast transmitting unit 21 and an instruction receiving unit 22. The broadcast transmitting unit 21 broadcasts a broadcast signal including content. Content includes a program that is general content broadcast in accordance with a broadcast scheduling, and an event that is emergent content that occurs in non-synchronization with a program. For example, an event includes an emergency warning signal and an earthquake emergency warning, a module update for data broadcast, an event message, and the like, which are the contents that do not necessarily occur in conjunction with a program. The instruction receiving unit 22 receives policy data from the data management device 3. Policy data is data indicating how to control a method of outputting a broadcast and an application, based on a program on the air, an event included in the broadcast signal, an application provider, and the like. The broadcast sending unit 21 multiplexes the policy data received by the instruction receiving unit 22 and broadcast signals, and transmits the multiplexed signals.

The data management device 3 manages policy data. The data management device 3 includes an input unit 31, a transmitting unit 32, and an instructing unit 33. The input unit 31 receives updated policy data and a delivery path. The transmitting unit 32 transmits the updated policy data to the receiving device 4 in a case where a delivery path indicating a delivery via the Internet is received. The instructing unit 33 outputs the updated policy data to the broadcast sending device 2 in a case where the delivery path indicating a delivery via the Internet is received.

The receiving device 4 is a device, such as a television, a set top box, a personal computer, or a mobile terminal, and is a receiving device that can receive a broadcast signal broadcast from the sending device 2 and perform communication via the Internet. The receiving device 4 outputs a window and sound of a program broadcast by means of broadcast signals. Further, the receiving device 4 executes an application and outputs, in conjunction with a window and sound of a program, a window and sound of the content which the application in execution obtains from the content delivery device 5 via the Internet. In accordance with policy data, the receiving device 4 controls a method of outputting a broadcast and an application. The policy data may be previously stored in the receiving device 4, or obtained by broadcasting or communication.

The content delivery device 5 is a general content delivery server and delivers via the Internet to an application to be executed by the receiving device 4, content such as texts, still images, and motion pictures.

Applications operative on the receiving device 4 are provided by various providers. Authority data indicating an application provider is added to each application. The provider indicated by the authority data is categorized into a broadcasting organization, another provider certified by the broadcasting organization, another provider, and the like. Here, a path via which to obtain the application is arbitrary. For example, the receiving device 4 may receive an application by broadcasting or by communication via the Internet. The receiving device 4 may read the application from an information recording medium or the like. Alternatively, the application may be stored in the receiving device 4 at the time of shipping. Hereinafter, an application to be provided by a broadcasting organization is referred to as a "broadcasting organization providing application", and an application to be provided by another provider certified by the broadcasting organization is referred to as a "certified application".

Here, the concept of a relationship among a program, an event, and a policy is explained.
A policy is categorized into two types of policy that are a program policy and a trigger policy. The program policy is a policy associated with a program, and a policy level is set to each program. On the other hand, the trigger policy is a policy added to an event, and a policy level is set to each event. The receiving device 4 prioritizes the poly level of the trigger poly over the policy level of the program policy while an event to which the trigger policy is set occurs. Additionally, in a case where multiple events occur simultaneously, the receiving device 4 prioritizes the highest policy level. Hereinafter, a policy level of the program policy is referred to as a "program policy level", and a policy level of the trigger policy is referred to as a "trigger policy level".

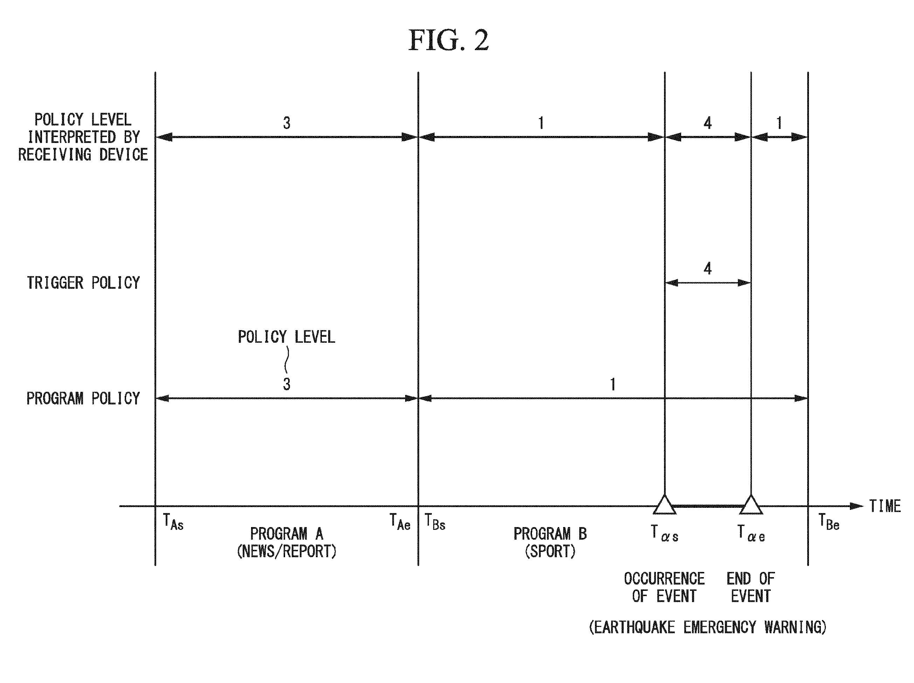

FIG. 2 is a diagram illustrating an example of determination of policy levels by the receiving device 4.
FIG. 2 illustrates an example in a case where a program B (sport) is broadcast subsequently after a program A (news/report) is broadcast, and an earthquake emergency warning is sent while the program B is broadcast. In the present embodiment, a policy level is represented by four levels of 1 to 4. As the policy level increases, the value increases and restriction on the display of a window for an application and the output of sound of the application becomes stricter. A program policy level of the program A is "3". A program policy level of the program B is "1". A trigger policy level of an earthquake emergency warning is "4".

In this case, the receiving device 4 determines that the policy level required by the broadcasting organization in an interval from time T_{As} to time T_{Ae}, which is the airtime of the program A, is the program policy level "3" of the program A. Additionally, the receiving device 4 determines that the policy level in an interval from time T_{Bs} to time T_{Be}, which is the airtime of the program B, is the program policy level "1" of the program B, but the policy level in an interval from time T_{αs} to time T_{αe}, which is included in the airtime of the program B, is the trigger policy level "4" of the earthquake emergency warning.
Thus, the receiving device 4 determines the policy level in accordance with the policy of the broadcasting organization and controls the output of a broadcast and an application based on the determined policy level.

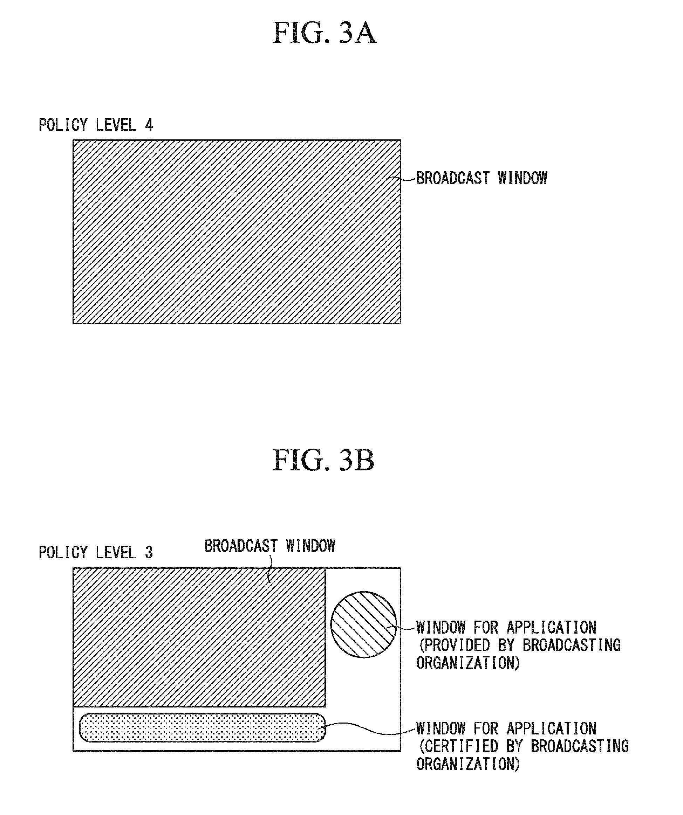

FIGS. 3A to 3D are diagrams illustrating a relationship between a policy level and a method of displaying a broadcast window and an application window. In those figures, a relationship among the total three windows, which are a broadcast window, an application window for a broadcasting organization providing application, and an application window for a certified application, is shown for each policy level. Here, a display of an application window and an output of sound are not allowed for an application which is added with authority data not indicating a broadcasting organization, and which is to be provided by a provider other than the other provider certified by the broadcasting organization.

As shown in FIG. 3A, in a case where the policy level is "4", only a full display of the broadcast window is allowed.
As shown in FIG. 3B, in a case where the policy level is "3", it is allowed to display the application window for the broadcasting organization providing application and the application window for the certified application. However, every application window is prohibited from being overlay-displayed on the broadcast window and is allowed only to be displayed outside the broadcast window.

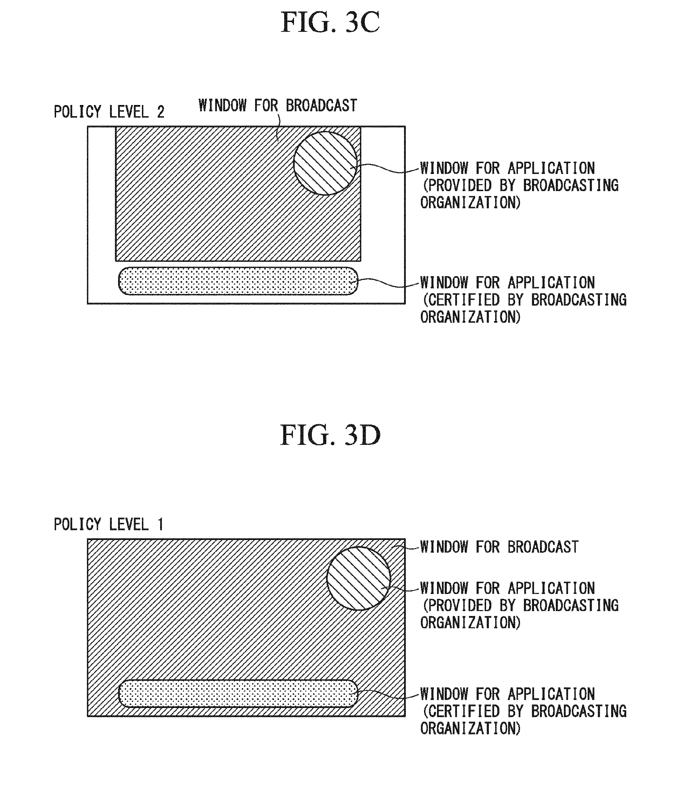

As shown in FIG. 3C, in a case where the policy level is "2", it is allowed to display the application window for the broadcasting organization providing application and the application window for the certified application. However, only an application window for the broadcasting organization providing application is allowed to be overlay-displayed on the broadcast window. A window for an application other than the broadcasting organization providing application is prohibited from being overlay-displayed on the broadcast window, and is allowed to be displayed outside the broadcast window.

As shown in FIG. 3D, in a case where the policy level is "1", it is allowed to display the application window for the broadcasting organization providing application and the application window for the certified application. Both the window for the broadcasting organization providing application and the window for the certified application are allowed to be overlay-displayed on the broadcast window.

Here, a sound outputting method for each policy level is as follows. In a case where the policy level is "4" or "3", it is allowed to output only sound of the broadcast. In a case where the policy level is "2", it is allowed to output only sound of the broadcasting organization providing application. However, the sound of the broadcast and the sound of the application are independently outputted by switching. In a case where the policy level is "1", it is allowed to output sound of the broadcasting organization providing application and sound of the certified application. Both for the broadcasting organization providing application and the certified application, however, the sound of the broadcast and the sound of each application are independently outputted by switching.

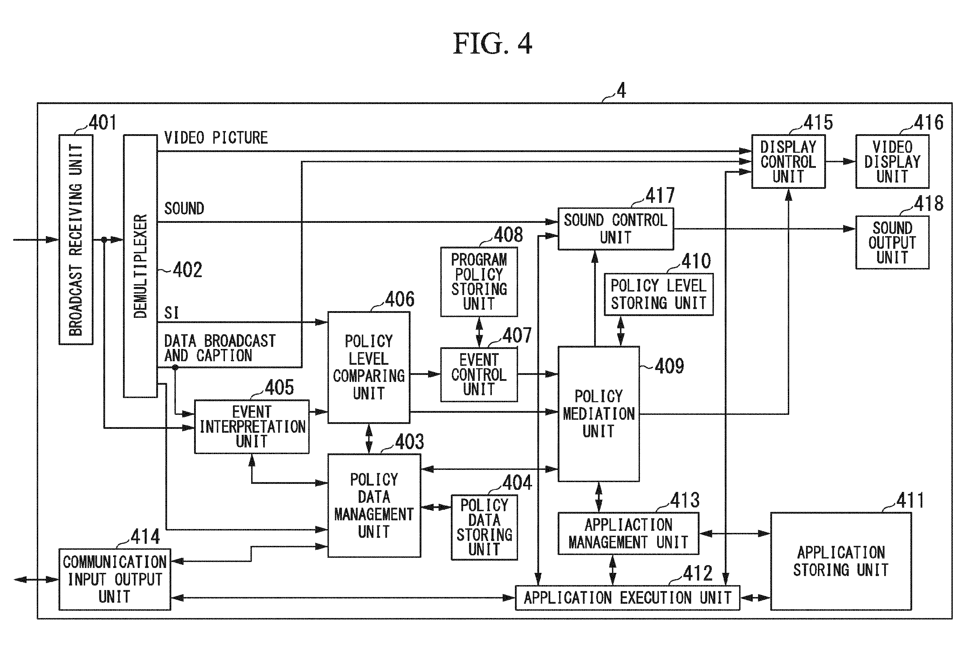

FIG. 4 is a block diagram illustrating an internal configuration of the receiving device 4.
A broadcast receiving unit 401 is a general tuner, and receives and demodulates a broadcast signal of digital broadcast. A demultiplexing unit 402 is a general demultiplexer, and demultiplexes the MPEG (moving picture experts group)-2 TS (transport stream) signal demodulated by and output from the broadcast receiving unit 401, into program information, such as image data, sound data, data broadcast, caption data, and SI (service information) data, and the like. Additionally, the demultiplexing unit 402 demultiplexes policy data as binary data transmitted by a section system, engineering service, or a data carousel system.

A communication input output unit 414 inputs and outputs data by communication via the Internet. The communication input output unit 414 receives policy data from the data management device 3 and receives content delivered from the content delivery device 5 to the application execution unit 412.

The policy data storing unit 404 interprets a policy of the broadcasting organization, and stores policy data to be used for controlling a display and version data of that policy data. The policy data includes an event interpretation program, a policy level table, and an output determination table. The event interpretation program is a program for performing a process of analyzing broadcast signals and detecting a start and an end of an event that occurs in non-synchronization with a program. The policy level table is data describing a program policy level of each program and a trigger policy level of each event. The output determination table is data describing an outputting method for each policy level.

The policy data management unit 403 manages the policy data stored in the policy data storing unit 404. The policy data management unit 403 outputs to a policy level comparing unit 406, the policy level table read from the policy data storing unit 404. Additionally, the policy data management unit 403 outputs to the event interpretation unit 405, the event interpretation program read from the policy data storing unit 404. Further, the policy data management unit 403 outputs to a policy mediation unit 409, the output determination table read from the policy data storing unit 404. Moreover, the policy data management unit 403 writes in the policy data storing unit 404, the policy data that the broadcast receiving unit 401 has obtained from the received broadcast signals or the policy data received by the communication input output unit 414.

Additionally, the policy data management unit 403 updates policy data and version data of the policy data which are stored in the policy data storing unit 404 with policy data received by broadcasting or communication. For example, the policy data management unit 403 obtains from the broadcast signal received by the broadcast receiving unit 401, policy data and version data of the policy data which are transmitted by a section system, engineering service, or a data carousel system. Then, the policy data management unit 403 updates the policy data and the version data of the policy data which are stored in the policy data storing unit 404 with the policy data and the version data of the policy data which are obtained.

The event interpretation unit 405 operates by executing the event interpretation program obtained from the policy data management unit 403. The event interpretation unit 405 analyzes the broadcast signal received by the broadcast receiving unit 401, and the data broadcast and the caption data which are demultiplexed by the demultiplexing unit 402, and thus detects an occurrence or end of an event. Upon detecting an occurrence or end of an event, the event interpretation unit 405 outputs to the policy level comparing unit 406, an event number (event_number) of the detected event and status data indicating the occurrence or the end.

The policy level comparing unit 406 refers to the policy level table and determines a program policy level of each program and a trigger policy level associated with the event number. The policy level comparing unit 406 outputs to the event control unit 407, data indicating the program start time and the program end time of the program obtained from the SI received from the demultiplexing unit 402, and the determined program policy level of the program. Additionally, the policy level comparing unit 406 outputs to the policy mediation unit 409, the determined trigger policy level associated with the event number.

The program policy storing unit 408 associates the program start time, the program end time, and the program policy level with one another and stores those informations. The event control unit 407 associates the data indicating the program start time and the program end time which is received from the policy level comparing unit 406, and the program policy level with each other, and writes those informations in the program policy storing unit 408. Based on the those informations stored in the program policy storing unit 408, the event control unit 407 manages time at which to control a display. In a case where the event control unit 407 refers to the data indicating the program start time which is stored in the program policy storing unit 408 and thus detects that the time at which to communicate the execution time has come, the event control unit 407 outputs to the policy mediation unit 409, the execution time and the program policy level associated with that execution time.

The policy level storing unit 410 stores the execution time and the program policy level which are input to the policy mediation unit 409, the trigger policy level, and the status data. The policy mediation unit 409 determines a policy level based on the execution time and the program policy level which are received from the event control unit 407, and the trigger policy level received from the policy level comparing unit 406. The policy mediation unit 409 refers to the output determination table and determines a method of outputting a broadcast and an application based on the determined policy level, and authority and an output state of the running application which are obtained from the application management unit 413. The output state is information concerning whether or not an image or sound is being output from the running application. The policy mediation unit 409 outputs the determined window displaying method to the display control unit 415, and outputs the determined sound outputting method to the sound control unit 417.

The application storing unit 411 stores an application and authority data indicating authority of the application. The application execution unit 412 reads and executes the application stored in the application storing unit 411. The application management unit 413 manages, using the application execution unit 412, a running or terminated state of an application and an output state of a running application. The application management unit 413 receives an inquiry from the policy mediation unit 409, and transmits back the output state of the running application and the authority data of the application which is read from the application storing unit 411.

In accordance with the window displaying method outputted from the policy mediation unit 409, the display control unit 415 controls the video display unit 416 to display the broadcast window and the application window. The video display unit 416 is a general display and displays windows for broadcast and application.
In accordance with the sound outputting method outputted from the policy mediation unit 409, the sound control unit 417 controls the sound output unit 418 to output sound of a program and sound of an application. The sound output unit 418 is a general speaker and outputs sound of a broadcast and sound of an application.

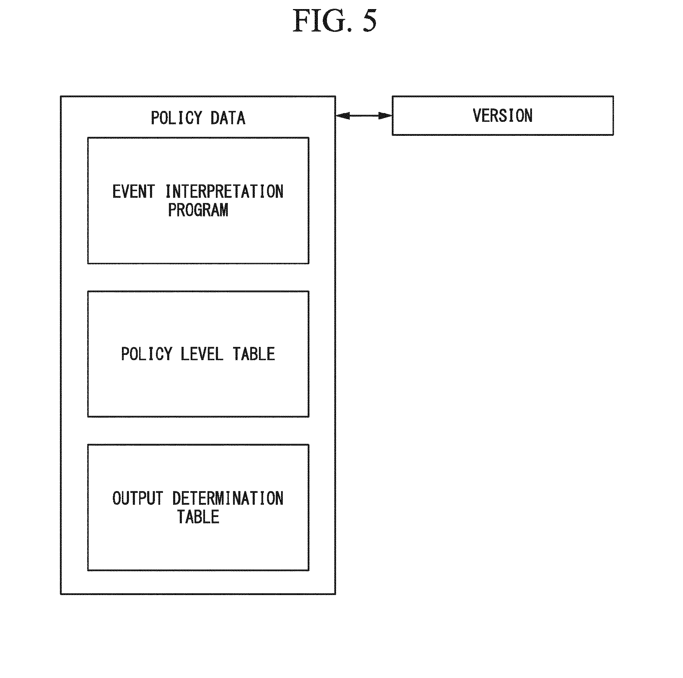

FIG. 5 is a diagram illustrating the policy data stored in the policy data storing unit 404. As shown in FIG. 5, the policy data storing unit 404 stores policy data and version data. The policy data includes the event interpretation program, the policy level table, and the output determination table.

The event interpretation program is a program for performing a process of detecting an event that occurs while a program is on the air. Specifically, the interpretation program is a program for performing processes of detecting an occurrence or end of an event by analyzing behavior of a broadcast signal, and outputting an event number that specifies the detected event. The behavior of the broadcast signal indicates a change in the contents of the broadcast signal which occurs in accordance with the start and the end of the event. For example, a predetermined value is set to a predetermined portion of the broadcast signal, or predetermined information in the broadcast signal is lost.

Hereinafter, an example of behavior of a broadcast signal, which is a condition for detecting an event in the event detecting process executed by the event interpretation program, is shown. The event interpretation unit 405 of the receiving device 4 executes the event interpretation program and detects an occurrence or end of an event when one of the following conditions is met. Here, the event to be detected in the event detecting process is not limited to the following events.

(1) Emergency warning signal: in a case where an event related to an emergency warning signal occurs, an emergency warning broadcast boot flag of TMCC (transmission and multiplexing configuration and control) (a bit of B26 of TMCC information) changes from "0" to "1", and in a case where the event related to the emergency warning signal ends, the emergency warning broadcast boot flag changes from "1" to "0".

(2) Earthquake emergency warning: in a case where an event related to earthquake emergency warning occurs, binary data corresponding to the text of "earthquake emergency warning" appears at data_group_data_byte in a data group in caption data transmitted by an independent PES (packetized elementary stream) system. In a case where the event related to the earthquake emergency warning ends, the binary data disappears. Here, broadcast service associated with this event is limited to the ISDB-T system.

(3) Module update of data broadcast and event message: regarding a data broadcast, in order to update the contents of information, a BML file and an image file are transmitted by a data carousel system or an event message system. In this case, upon the transmission of update information, a value of data_event_id of DII (download info indication) and DDB (download data block) or a value of module Version of the DII varies in the data carousel system, and a value of event_msg_id varies in an event message system. An occurrence of an event is detected when those values appear. Additionally, an end of the event is detected when those values disappear or a predetermined period of time elapses from the time at which the event occurs.
   This is applicable to, for example, a case where a weather warning is announced to a concerned area while weather information is provided by independent data broadcast, a case where news items are updated while news are provided, a case where data is overlay-displayed on a broadcast window for a program-linked data broadcast in accordance with the progression of a program, and the like.

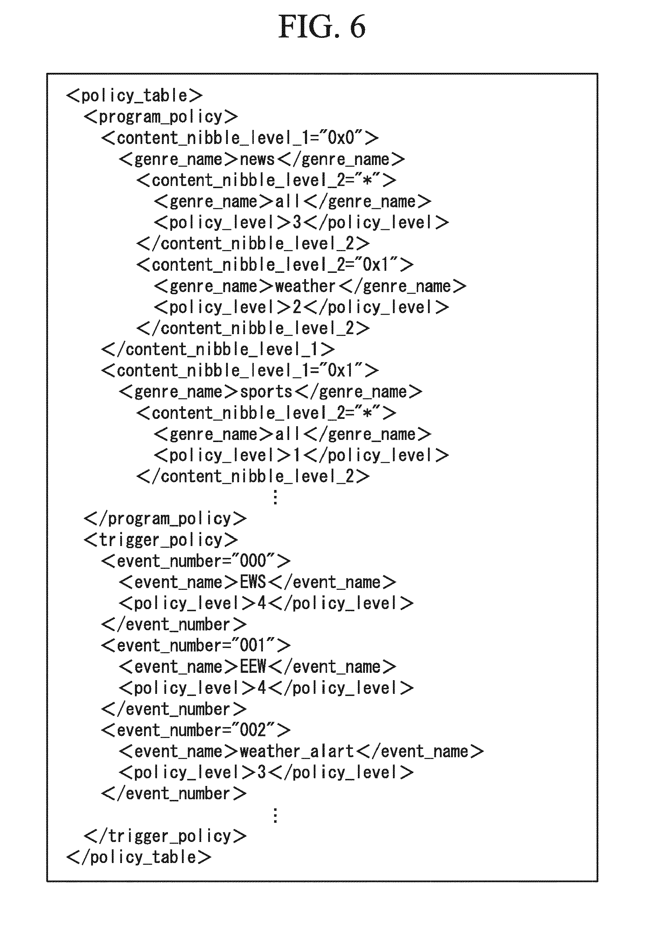

FIG. 6 is a diagram illustrating an example of a setting of a policy level table. Although a policy level table described in XML (extensible markup language) is shown in FIG. 6, another description format may be used. A program policy level for each program genre and a trigger policy level for each event that occurs while a program is on the air are described in the policy level table. A value of the policy level indicated by a tag "policy_level" represents a level of the policy level.

The policy for each program genre is described in an area surrounded by a tag "program_policy". Program genre information indicating a program genre is similar to a descriptor defined in a content descriptor in an EIT (event information table) included in a broadcast signal. The program genre information includes "content_nibble_level_1" and "content_nibble_level_2". "content_nibble_level_1" indicates a major category of a program genre (hereinafter referred to as "major genre"). "content_nibble_level_2" indicates an intermediate category of a program genre (hereinafter referred to as "intermediate genre").

The policy level table shown in FIG. 6 describes that: regarding the major genre (content_nibble_level_1) with a value "0x0", the genre name (genre_name) is "news (news/report)"; and regarding the intermediate genre (content_nibble_level_2) with an arbitrary value ("*" indicates an arbitrary value) which belongs to the major genre, the program policy level (policy_level) is "3". In other words, the policy level table shows that the program policy levels of all the programs belonging to the "news/report" are "3".
Regarding the intermediate genre (content_nibble_level_2) with a value "0x1", however, the policy level table describes that the genre name (genre_name) is "weather", and the program policy level (policy_level) is "2". In other words, the program policy level of only a program belonging to the intermediate genre "weather" belonging to the major genre "news/report" is "2".

Additionally, the policy level table describes that: regarding the major genre (content_nibble_level_1) with a value "0x1", the genre name (genre_name) is "sports (sports)"; and regarding the intermediate genre (content_nibble_level_2) with an arbitrary value which belongs to the major genre, the program policy level (policy_level) is "1". In other words, the policy level table shows that the program policy levels of all the programs belonging to the "sports" are "1".

On the other hand, a policy of an event that occurs while a program is on the air is described in an area surrounded by a tag "trigger_policy". A policy of each event is defined for each event number (event_number). The event number is an event number communicated from the event interpretation unit 405 in execution of the event interpretation program, and indicates an event detected by the event interpretation unit 405.

The policy level table shown in FIG. 6 describes that regarding the event having the event number (event_number) "000", the event name (event_name) is "EWS (emergency warning signal)", and the trigger policy level (policy_level) is "4".
Additionally, the policy level table describes that regarding the event having the event number (event_number) "001", the event name (event_name) is "EEW (earthquake emergency warning)", and the trigger policy level (policy_level) is "4".
Further, the policy level table describes that regarding the event having the event number (event_number) "002", the event name (event_name) is "weather_alert (earthquake emergency warning)", and the trigger policy level (policy_level) is "3".

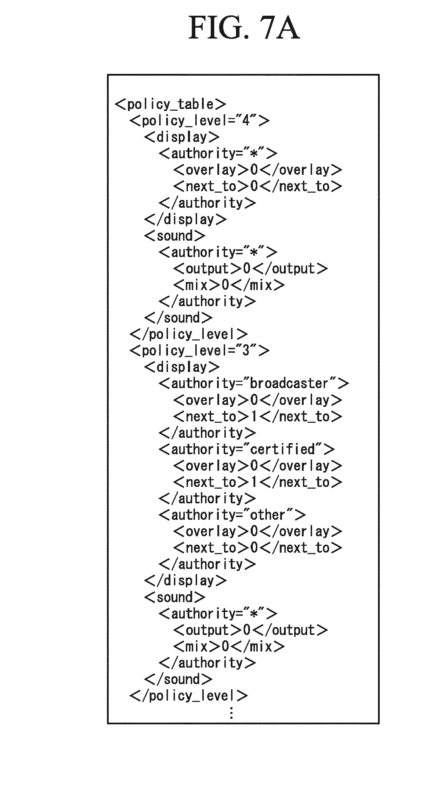

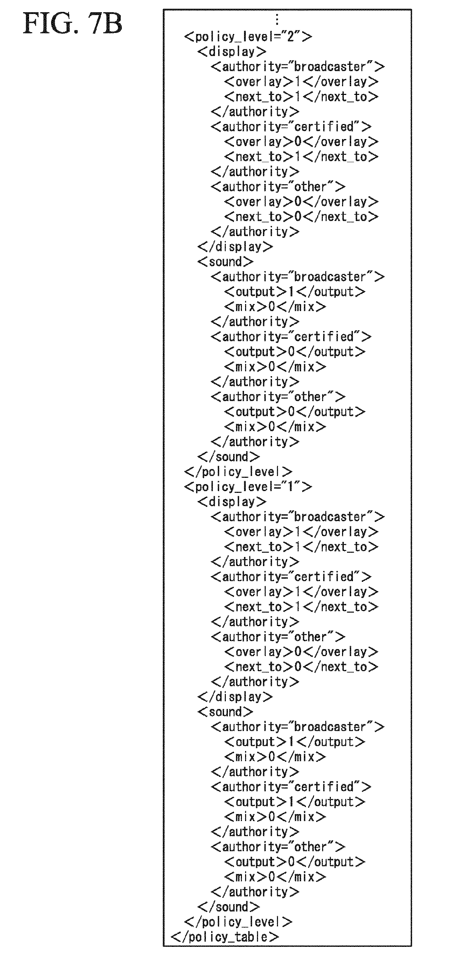

FIGS. 7A and 7B are examples of settings of the output determination table. Although the output determination table described in XML is shown in FIGS. 7A and 7B, another description format may be used. The output determination table is data indicating, for each policy level, a method of displaying a window for a broadcast and a window for an application (layout), and a method of outputting sound.

An outputting method in a case where the policy level is "4" is described in an area surrounded by a tag "policy_level='4'". An outputting method in a case where the policy level is "3" is described in an area surrounded by a tag "policy_level='3'". An outputting method in a case where the policy level is "2" is described in an area surrounded by a tag "policy_level='2"'. An outputting method in a case where the policy level is "1" is described in an area surrounded by a tag "policy_level='1"'. Additionally, a window displaying method is described in a tag "display". A sound outputting method is described in a tag "sound".

A tag "authority" in the tag "display" indicates the type of an application authority (broadcasting organization, another provider certified by the broadcasting organization, another provider). A "overlay" tag indicates allowance (1) or prohibition (0) of an overlay-display of an application window on a broadcast window. A tag "next_to" indicates allowance (1) or prohibition (0) of a display of an application window next to a broadcast window.
Additionally, a tag "authority" in the tag "sound" indicates the type of application authority. A tag "output" indicates allowance (1) or prohibition (0) of an output of application sound independently of an output of broadcast sound. A tag "mix" indicates allowance (1) or prohibition (0) of an output of application sound mixed with an output of broadcast sound.

For example, in a case where the policy level (policy_level) is "4", regarding arbitrary authority (authority), it is described that "0 (prohibition)" is set for both an overlay-display on a broadcast window and a display next to a broadcast window. In this case where the policy level is "4", this indicates that application windows for all applications are not allowed to be overlay-displayed on a broadcast window, nor to be displayed next to the broadcast window. In other words, only the broadcast window is allowed to be displayed.

Additionally, in a case where the policy level (policy_level) is "4", regarding arbitrary authority (authority), it is described that "prohibition (0)" is set for both independent outputs of sound (output) and an output of sound mixed with broadcast sound (mix). In this case where the policy level is "4", this indicates that sounds of all applications are not allowed to be output, nor to be mixed with the broadcast sound. In other words, only the sound of a program is allowed to be output.

On the other hand, in a case where the policy level (policy_level) is "1", the authority (authority) is "broadcaster (broadcasting organization)" or "certified (another provider certified by the broadcasting organization)", it is described that "1 (allowance)" is set for both an overlay-display on a broadcast window (overly) and a display next to the broadcast window (next_to). In this case where the policy level is "1", this indicates that an application window for a broadcasting organization providing application and an application window for a certified application are allowed to be overlay-displayed on, and displayed next to, a broadcast window.

Further, in a case where the policy level (policy_level) is "1", the authority (authority) is "other (another provider)", it is described that "0 (prohibition)" is set for both an overlay-display on a broadcast window (overly) and a display next to the broadcast window (next_to). In this case where the policy level is "1", this indicates that an application window for an application other than the broadcasting organization providing application and the certified application is not allowed to be displayed.

Moreover, in a case where the policy level (policy_level) is "1", the authority (authority) is "broadcaster (broadcasting organization)" or "certified (another provider certified by the broadcasting organization)", it is described that "1 (allowance)" is set for independent outputs of sound (output), and "0 (prohibition)" is set for an output of sound mixed with broadcast sound (mix). In this case where the policy level is "1", this indicates that both the sound of the broadcasting organization providing application and the sound of the certified application are allowed to be outputted, but are prohibited from being mixed with the broadcast sound.

Additionally, in a case where the policy level (policy_level) is "1", the authority (authority) is "other (another provider)", it is described that "prohibition (0)" is set for both independent outputs of sound (output) and an output of sound mixed with broadcast sound (mix). In this case where the policy level is "1", this indicates that sound of an application other than the broadcasting organization providing application and the certified application is not allowed to be outputted.

Subsequently, an operational procedure of the broadcasting system is explained.
The application storing unit 411 of the receiving device 4 previously stores one or more applications. Each application is added with a digital signature of a provider of the application. The application execution unit 412 of the receiving device 4 has read the one or more applications from the application storing unit 411 and has been executing the one or more applications. The application execution unit 412 instructs the communication input output unit 414 to transmit a request for content to the content delivery device 5. The communication input output unit 414 transmits the request for content to the content delivery device 5 via the Internet. Upon receiving the request for content, the content delivery device 5 delivers the content to the receiving device 4. The communication input output unit 414 of the receiving device 4 outputs to the application execution unit 412, the content received from the content delivery device 5 via the Internet.

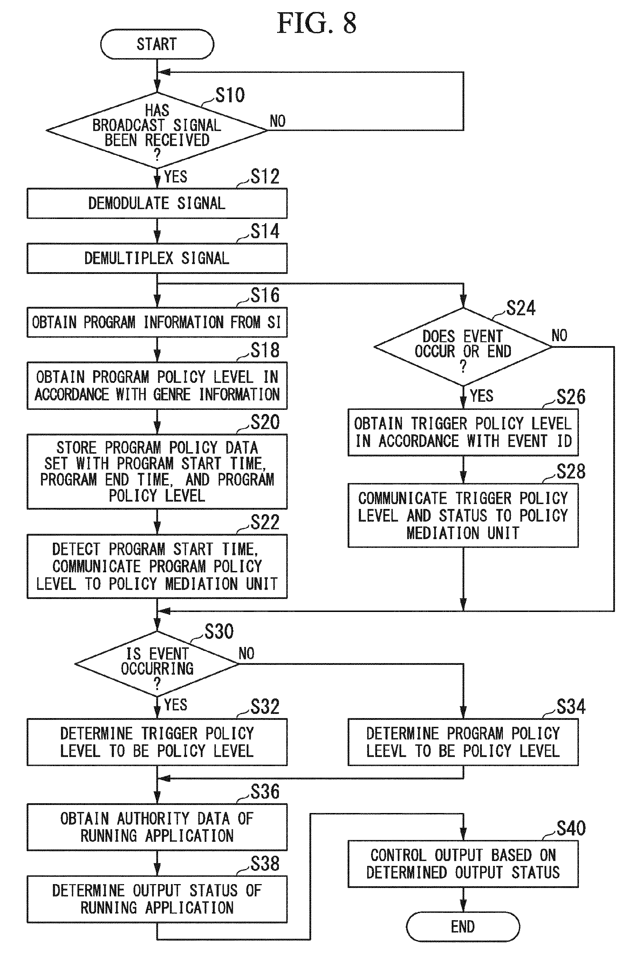

FIG. 8 is a flowchart illustrating process flow for the receiving device 4.
The broadcast transmitting unit 21 of the broadcast sending device 2 broadcasts a broadcast signal of a digital broadcast. Upon receiving the broadcast signal broadcast by the broadcast sending device 2 (step S10: YES), the broadcast receiving unit 401 of the receiving device 4 demodulates the received broadcast signal and outputs the demodulated broadcast signal to the demultiplexing unit 402 and the event interpretation unit 405 (step S12). The demultiplexing unit 402 demultiplexes the MPEG-2 TS signal obtained by the broadcast receiving unit 401 demodulating the broadcast signal into program information, such as image data, sound data, data broadcast and caption data, and SI data, and the like (step S 14). The SI indicates various informations provided by an electronic program guide (EPG). The demultiplexing unit 402 outputs the image data to the display control unit 415. The demultiplexing unit 402 outputs the sound data to the sound control unit 417. The demultiplexing unit 402 outputs the data broadcast and caption data to the event interpretation unit 405.

The policy level comparing unit 406 reads from content descriptors of an EIT (event information table) indicated by the SI, a program ID (event_id), the program start time and the program end time, and genre information (step S16). The policy level comparing unit 406 instructs the policy data management unit 403 to read the policy level table. The policy data management unit 403 reads the policy level table from the policy data storing unit 404 and outputs the read policy level table to the policy level comparing unit 406. The policy level comparing unit 406 reads from the received policy level table, a program policy level associated with major and intermediate genres indicated by the genre information (step S18). The policy level comparing unit 406 outputs to the event control unit 407, program policy data set with the program ID, the program start time and the program end time, and the program policy level. Thus, even in a case where the contents of the EIT are changed in accordance with a change in program structure, it is possible to timely communicate that change to the event control unit 407.

The event control unit 407 writes in the program policy data storing unit 404, the program policy data received from the policy level comparing unit 406 (step S20). Upon detecting that the program start time indicated by the program policy data stored in the program policy data storing unit 404 has come, or upon detecting, in consideration of a processing time, that the time preceding the program start time by a predetermined period of time has come, the event control unit 407 outputs to the policy mediation unit 409, the program policy level read from the program policy data set with that program start time, and the execution time set with the program start time (step S22).

On the other hand, the event interpretation unit 405 analyzes the broadcast signal received from the broadcast receiving unit 401 in step S12, and the data broadcast and caption data received from the demultiplexing unit 402 in step S 14, and detects an occurrence or end of an event. In a case where an occurrence or end of an event is detected (step S24: YES), the broadcast receiving unit 401 outputs to the policy level comparing unit 406, an event number of the detected event, and status data indicating the occurrence or end of the event.

Upon receiving the event number from the event interpretation unit 405, the policy level comparing unit 406 obtains from the policy data management unit 403, a policy level table stored in the policy data storing unit 404, in a similar manner to the above. The policy level comparing unit 406 reads from the policy level table, a trigger policy level associated with the received event number (step S26). Here, in a case where multiple event numbers are received, the policy level comparing unit 406 reads trigger policy levels of the respective event numbers. The policy level comparing unit 406 outputs to the policy mediation unit 409, trigger policy data set with the event number of the event, the status data of the event, and the trigger policy level (step S28).

Upon receiving the program policy level and the execution time from the event control unit 407 in step S22, the policy mediation unit 409 writes the received program policy level and the execution time in the policy level storing unit 410. Additionally, upon receiving the trigger policy data from the policy level comparing unit 406 in step S28, the policy mediation unit 409 writes the received trigger policy data in the policy level storing unit 410. At this time, in a case where trigger policy data set with the same event number as that set to the received trigger policy data has already been stored, the trigger policy data is overwritten with the trigger policy data received from the policy mediation unit 409.

In a case where policy data set with the status data indicating an occurrence of an event is stored in the policy level storing unit 410, the policy mediation unit 409 determines that an event is occurring (step S30: YES). If it is determined that an event is occurring, the policy mediation unit 409 determines the trigger policy level read from the policy data set with the status data indicating the occurrence of the event, to be the current policy level (step S32). In a case where there are multiple policy data, each of which is set with status data indicating an occurrence of an event, the policy mediation unit 409 determines the highest trigger policy level to be the current policy level.

In a case where no policy data set with the status data indicating an occurrence of an event is stored in the policy level storing unit 410, the policy mediation unit 409 determines that an event is not occurring (step S30: NO). If it is determined that an event is not occurring, the policy mediation unit 409 refers to the policy level storing unit 410 and specifies the execution time closest to the current time. Then, the policy mediation unit 409 reads the program policy level associated with the read execution time. The policy mediation unit 409 determines the read program policy level to be the current policy level (step S34).

After step S32 or step S34, the policy mediation unit 409 requests the application management unit 413 to communicate the authority data of the running application. The application management unit 413 specifies the currently running application, and reads from the application storing unit 411, the application ID of the specified application, and the digital signature added to that application. Running applications are multiple in some cases. The application management unit 413 generates authority data indicating a provider indicated by the digital signature. The application management unit 413 outputs to the policy mediation unit 409, the application ID of the running application, the authority data of that application, and the output state (step S36).

The policy mediation unit 409 instructs the application management unit 413 to read the output determination table. The application management unit 413 outputs to the policy mediation unit 409, the output determination table read from the policy data storing unit 404. The policy mediation unit 409 determines the type of provider based on the provider indicated by the authority data of each application obtained from the application management unit 413. The policy mediation unit 409 reads from the output determination table, an outputting method (a window displaying method and a sound outputting method) associated with the received policy level and the type of provider indicated by the authority data of each application. Then, the policy mediation unit 409 instructs to perform control by the read outputting method (step S38). Specifically, with respect to an application for which the output status indicates presence of a displayed window, the policy mediation unit 409 outputs to the display control unit 415, the application ID of that application and a method of displaying that application. Additionally, with respect to an application for which the output state indicates presence of sound output, the policy mediation unit 409 outputs to the sound control unit 417, the application ID of that application and a method of outputting the sound of that application.

In accordance with the window displaying method associated with the application ID received from the policy mediation unit 409, the display control unit 415 determines an arrangement and the overlay-displaying order of a broadcast window and an application window that is outputted from the application specified by the application ID (in such a case where the application window is overlay-displayed on the broadcast window). The display control unit 415 controls the video display unit 416 to display windows in accordance with the determined arrangement and the overlay-displaying order.
Additionally, in accordance with the window displaying method associated with the application ID received from the policy mediation unit 409, the sound control unit 417 determines sound of the broadcast and the sound level of the application specified by the application ID. Then, the policy mediation unit 409 controls the sound output unit 418 to output sound in accordance with the determined sound output level (step S40).

Here, in the above embodiment, while an event is occurring, the trigger policy level is prioritized over the program policy level. However, the higher one of the trigger policy level and the program policy level may be prioritized over the other one. Specifically, in step S32, the policy mediation unit 409 reads a trigger policy level from the policy data set with the status data indicating an occurrence of an event. Further, the policy mediation unit 409 refers to the policy level storing unit 410 and specifies the execution time closest to the current time. Then, the policy mediation unit 409 reads the program policy level associated with the specified execution time. In a case where the policy mediation unit 409 determines that a value of the trigger policy level is greater than a value of the program policy level, the policy mediation unit 409 determines the trigger policy level to be the current policy level. In a case where the policy mediation unit 409 determines that a value of the trigger policy level is smaller than or equal to a value of the program policy level, the policy mediation unit 409 determines the program policy level to be the current policy level.

Additionally, in a case where it is necessary to update policy data, the input unit 31 of the data management device 3 receives the updated policy data, the updated version data, and a delivery path. In a case where the delivery path indicates a delivery via the Internet, the transmitting unit 32 of the data management device 3 transmits the updated policy data and the version data to the receiving device 4 via the Internet. The communication input and output unit 414 of the receiving device 4 outputs to the policy data management unit 403, the received policy data and the version data.

In a case where the version data received from the communication input and output unit 414 indicates a version newer than indicated by the version data currently stored in the policy data storing unit 404, the policy data management unit 403 updates the policy data and the version data currently stored in the policy data storing unit 404 with the received policy data and the version data.

On the other hand, in a case where the delivery path indicates a delivery by broadcasting, the instructing unit 33 of the data management device 3 outputs to the broadcast sending device 2, the updated policy data and the updated version data. The broadcast transmitting unit 21 of the broadcast sending device 2 broadcasts the policy data and the version data received from the data management device 3, as binary data, by means of a broadcast signal, by the section system, the data carousel system, or the engineering service. The broadcast signal received and demodulated by the broadcast receiving unit 401 of the receiving device 4 is outputted to the demultiplexing unit 402. The demultiplexing unit 402 demultiplexes the policy data and the version data from the broadcast signal, and outputs the demultiplexed policy data and the version data to the policy data management unit 403. In a case where the version indicated by the received version data is new, the policy data management unit 403 updates the policy data and the version data currently stored in the policy data storing unit 404 with the received policy data and the version data in a similar manner to the above.

Additionally, the delivery path may indicate both a delivery by broadcasting and a delivery via the Internet.
In a case where policy data and version data are received both by broadcasting and via the Internet, the receiving device 4 updates data stored in the policy data storing unit 404 with the policy data having the newer version. In other words, in a case where policy data and version data are received both from the communication input and output unit 414 and the demultiplexing unit 402, the policy data management unit 403 of the receiving device 4 compares the version data of the policy data received from the communication input and output unit 414 to the version data of the policy data received from the demultiplexing unit 402, and selects the policy data for which the version data indicates the newer version. Then, in a case where the version data of the selected policy data indicates a version newer than indicated by the version data currently stored in the policy data storing unit 404, the policy data management unit 403 updates the policy data and the version data currently stored in the policy data storing unit 404 with the selected policy data and the version data.

Although the above embodiment shows the case where the authority data indicates an application provider, another information may be used. For example, the authority data may indicate the type of application provider itself, and values of levels sorted according to the degree of restriction on an output of an application may be used. Additionally, for example, irrespective of an application provider, a broadcasting organization may determine whether or not each application is an application certified by the broadcasting organization, and information indicating whether or not each application is an application certified by the broadcasting organization, may be used as the authority data. In the policy table, an outputting method is described for each policy level and each authority data. Additionally, an identifier of each application may be used in lieu of the authority data.

Here, in a case where values of levels sorted according to the degree of restriction on an output of an application are used as the authority data, the authority data of each application may be transmitted from the broadcast sending device 2 by means of a broadcast signal, or from the data management device 3 by communication via the Internet. The application management unit 413 updates the authority data of each application stored in the application storing unit 411 with the authority data of each application received by means of a broadcast signal or by communication via the Internet. Additionally, information concerning a program, an event, or a validity period may be added to the authority data to be transmitted. In step S36 shown in FIG. 8, the application management unit 413 reads authority data which is associated with the running application, and the program currently on the air or the currently occurring event, and which has the validity period in which the current time is included. Then, the application management unit 413 outputs the read authority data to the policy mediation unit 409. Thus, it is possible to control an output of each application in accordance with the intent of the broadcasting organization.

Additionally, an application may not be one that displays content obtained via the Internet. For example, an application may be an application that displays the time based on a clock included in the receiving device 4, an application that displays the remaining amount of a battery included in the receiving device 4, or the like.

Further, in the above embodiment, information concerning the electronic program guide is delivered by means of a broadcast signal. However, the information concerning the electronic program guide may be transmitted from the data management device 3 to the receiving device 4 via the Internet. The communication input and output unit 414 of the receiving device 4 outputs to the policy level comparing unit 406, the received information concerning the electronic program guide. The policy level comparing unit 406 obtains from the received information concerning the electronic program guide, genre information, the broadcast start time, and the broadcast end time of broadcast programs.

Moreover, the data management device 3 may transmit to the receiving device 4 via the Internet, event notice information set with an event number of an event and status data. The communication input and output unit 414 of the receiving device 4 outputs the event notice information to the policy level comparing unit 406. The policy level comparing unit 406 obtains from the received event notice information, the event number of the event and the status data.

Additionally, in the above embodiment, the receiving device 4 retrieves the program genre from a broadcast signal, and reads from the policy level table, a program policy level associated with the retrieved program genre. The broadcast sending device 2 may set the program policy level to the broadcast signal and broadcast the broadcast signal. The policy level comparing unit 406 of the receiving device 4 reads the program policy level from the received broadcast signal. Alternatively, the data management device 3 may transmit the program policy level to the receiving device 4. The communication input and output unit 414 of the receiving device 4 outputs the received program policy level to the policy level comparing unit 406.

Further, in the above embodiment, the receiving device 4 detects an occurrence of an event from broadcast signal, and reads from the policy level table, a trigger policy level associated with the detected event. However, the broadcast sending device 2 may set a trigger policy level of the occurring event to a broadcast signal and broadcast the broadcast signal. The policy level comparing unit 406 of the receiving device 4 reads the program policy level from the received broadcast signal. Alternatively, the data management device 3 may transmit the program policy level to the receiving device 4. The communication input and output unit 414 of the receiving device 4 outputs the received program policy level to the policy level comparing unit 406.

Moreover, in the above embodiment, the output determination table is included in the policy data. However, in lieu of the output determination table, the storing destination information and the version data of the output determination table may be included in the policy data. The storing destination information is data that specifies an output determination table storing device to be connected to the Internet, and is, for example, URL (uniform resource locator) or the like. The output determination table storing device stores the output determination table. Additionally, the version data of the output determination table is added to the storing destination information in the output determination table.

The policy data storing unit 404 stores the policy data, the version data of the policy data, the output determination table, and the version data of the output determination table. The policy data management unit 403 obtains the storing destination information and the version data of the output determination table from the policy data received by broadcasting or communication. Then, in a case where the obtained version data indicates a version newer than indicated by the version data of the output determination table stored in the policy data storing unit 404, the policy data management unit 403 obtains, via the communication input and output unit 414, the output determination table from the output determination table storing device specified by the above obtained storing destination information. The policy data management unit 403 updates the output determination table and the version data thereof stored in the policy data storing unit 404 with the obtained output determination table and the version data thereof (version data added to the storing destination information obtained from the policy data).

Alternatively, the broadcast sending device 2 may set the policy data, the version data of the policy data, the storing destination information of the output determination table, and the version data of the output determination table to PMT (program map table), AIT (application information table), or EIT, which is included in a broadcast signal. The policy data management unit 403 reads from the PMT, the AIT, or the EIT which is included in the broadcast signal, the policy data, the version data of the policy data, the storing destination information of the output determination table, and the version data of the output determination table.

In a case where a policy level (the program policy level, the trigger policy level) is set to the broadcast signal to be broadcast, the policy level is described in PMT (program map table), AIT (application information table), or EIT, which is included in a broadcast signal. The policy level comparing unit 406 of the receiving device 4 reads the policy level from the PMT, the AIT, or the EIT, which is included in the broadcast signal.

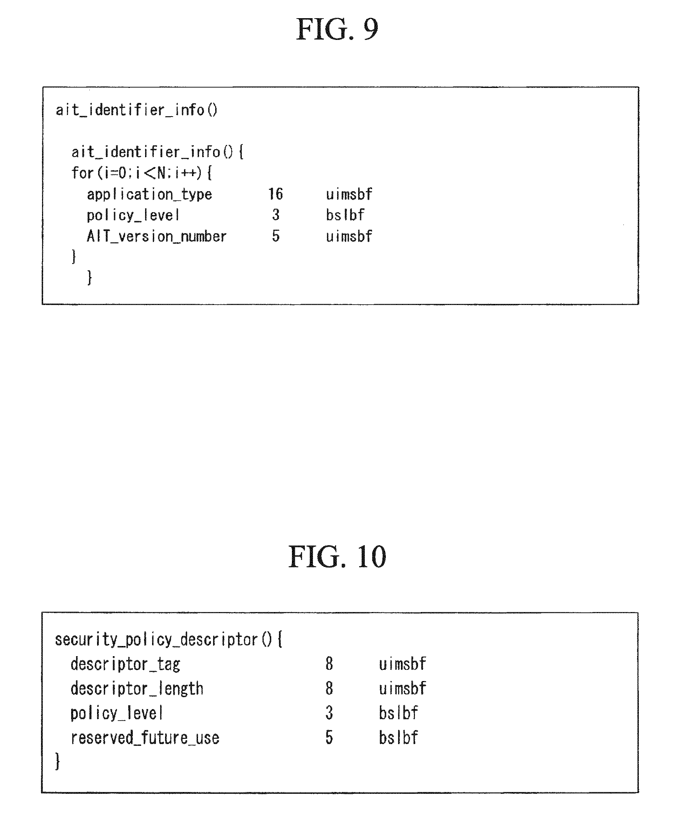

FIG. 9 is a diagram illustrating an example of a policy level described in the PMT. In the example shown in FIG. 9, part of the descriptor, ait_identifier_info(), which is defined in ARIB STD-B23, is redefined in order to set a policy level.
The PMT is associated with one broadcast program, and includes information that specifies TS (transport stream) packets of that broadcast program. The TS packets are packets for carrying an ES (elementary stream) that is image data and sound data of a broadcast program compressed by MPEG (moving picture experts group)-2. Further, the PMT includes information that specifies the TS packets for carrying an ES of the AIT. The information that specifies the TS packets for carrying the ES of the AIT includes a descriptor indicating a data encoding scheme for the ES of the AIT. The descriptor, ait_identifier_info(), is described in the descriptor indicating the data encoding scheme for the ES of the AIT. Here, the AIT includes additional application information for specifying or controlling an application.

As shown in FIG. 9, policy_level, as new data for setting a policy level, is added to the descriptor, ait_identifier_infor(). The broadcast sending device 2 sets a policy level to the added policy_level.

FIG. 10 is a diagram illustrating an example in which a policy level is described in the AIT. As shown in FIG. 10, in this description example, a security policy descriptor (security_policy_descriptor()) is newly defined. Then, this newly-defined security policy descriptor is added to a common descriptor loop of the AIT, which is defined by the ARIB STD-B23. The security policy descriptor includes policy_level, as data for setting a policy level. The broadcast sending device 2 sets a policy level to policy_level included in the security policy descriptor. In a case where a set value of the policy level is updated, the broadcast sending device 2 also updates a set value of version_number that is data included in the AIT.

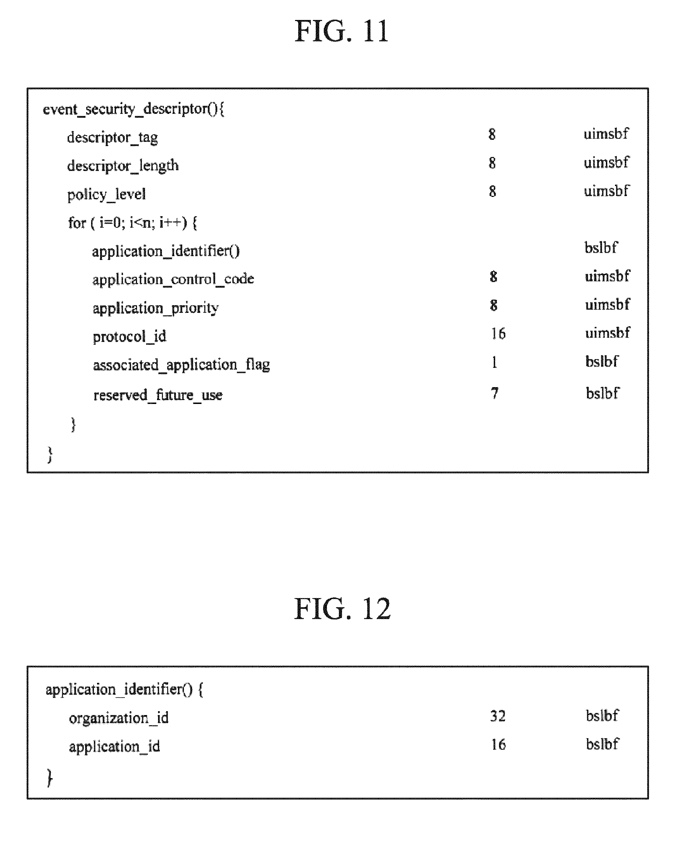

FIG. 11 is a diagram illustrating an example in which a policy level is described in the EIT.
In the example shown in FIG. 11, an event security descriptor (event_security_descriptor()) is newly defined in an event information section of the EIT. The event security descriptor includes policy_level, as data for setting a policy level. The broadcast sending device 2 sets a policy level to policy_level included in the event security descriptor.

The policy mediation unit 409 of the receiving device 4 determines a window displaying method based on a policy level with high priority. Here, the priority of the policy level is previously set such that "the trigger policy level associated with an event that is emergent content>the policy level set to the PMT>the policy level set to the AIT>the policy level set to the EIT>the program policy level associated with program genre". In other words, policy levels arranged in descending order of priority are: the trigger policy level associated with an event that is emergent content; the policy level set to the PMT; the policy level set to the AIT; the policy level set to the EIT; and the program policy level associated with program genre. In a case where two or more different policy levels are read by the policy level comparing unit 406, the policy mediation unit 409 reads from the output determination table, a window displaying method associated with the policy level having the highest priority.

Specifically, in a case where an event is occurring, the policy mediation unit 409 reads from the output determination table, a window displaying method associated with the trigger policy level associated with the occurring event. Additionally, in a case where no event is occurring and a policy level is set to a broadcast signal, the policy mediation unit 409 reads from the output determination table, a window displaying method associated with the policy level set to the broadcast signal. However, at this time, in a case where policy levels are described in two or more tables (PMT, AIT, or EIT) included in the broadcast signal, the policy mediation unit 409 reads from the output determination table, a window displaying method associated with the policy level in the table with the highest priority. Additionally, in a case where no event is occurring and no policy level is set to a broadcast signal, the policy mediation unit 409 reads from the output determination table, a window displaying method associated with the program policy level associated with the program genre retrieved from the broadcast signal.

Here, the PMT is a table that is transmitted periodically and reliably. For this reason, in a case where a policy level is set to the PMT, it is possible to reliably control a display of an application intended by the broadcasting organization in accordance with the progression of a program. Additionally, the AIT is a table that is timely transmitted as needed. For this reason, in a case where a policy level is set to the AIT, it is possible to control a display of an application in accordance with the progression of a program, based on the intent of the broadcasting organization. Further, the EIT is a table that is transmitted for each program. For this reason, in a case where a policy level is set to the EIT, it is possible to control a display of an application in accordance with a program.

For this reason, the policy level in the EIT is prioritized over the program policy level associated with a program genre, thereby making it possible to control a display for each program. In other words, it is possible to differently control a display of each of programs belonging to the same genre. Additionally, the policy level in the AIT is prioritized over the policy level in the EIT, thereby making it possible to reliably control a display in accordance with the progression of a program. Further, in a case where emergent or breaking information, such as an earthquake emergency warning or breaking news, is received, the trigger policy level is most prioritized, thereby making it possible to control a display while prioritizing an emergent event, thereby making it easier to transmit necessary information to viewers.

Additionally, an application identifier of an application, and a control code for controlling a state of the application identified by the application identifier may be included in the above event security descriptor added to the EIT. In the example shown in FIG. 11, the event security descriptor includes: application_identifier() that is a descriptor as the application identifier; application_control_code that is data for specifying a control code; protocol_id that is data for specifying a protocol to transmit an application; and associated_application_flag that is data for specifying whether or not the application is an application linked with a broadcast program.

FIG. 12 is a diagram illustrating a data structure of the descriptor, application_identifier(), as the application identifier. application_identifier() includes: organization_id that is data for specifying an organization having generated the application; and application_id that is data for specifying an identification number of the application. application_id is a number uniquely added in the organization having generated the application.

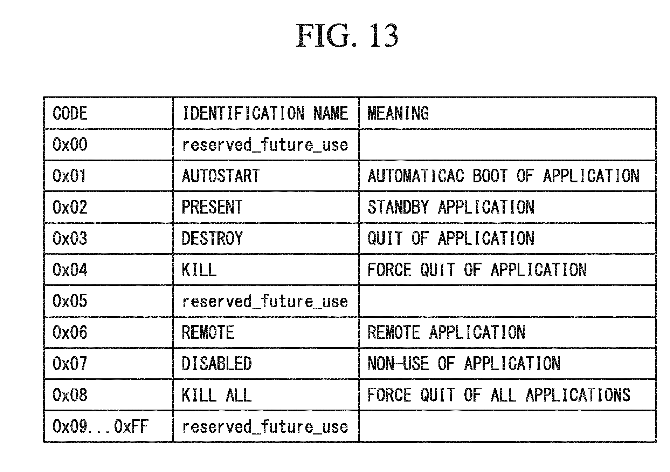

FIG. 13 is a diagram illustrating an example of a control code (application_control_code) for controlling a state of an application.
As shown in FIG. 13, an identification name "AUTOSTART" (code "0x01") is a control code indicating an automatic boot of an application. Additionally, an identification name "PRESENT" (code "0x02") is a control code indicating a standby of an application. Further, an identification name "DESTROY" (code "0x03") is a control code indicating a quit of an application. Moreover, an identification name "KILL" (code "0x04") is a control code indicating a force-quit of an application. Additionally, an identification name "REMOTE" (code "0x06") is a control code indicating a remote application. Further, an identification name "DISABLED" (code "0x07") is a control code indicating a non-use of an application. Moreover, an identification name "KILL ALL" (code "0x08") is a control code indicating a force-quit of all applications.

Here, the control code may be described in the AIT or the PMT.

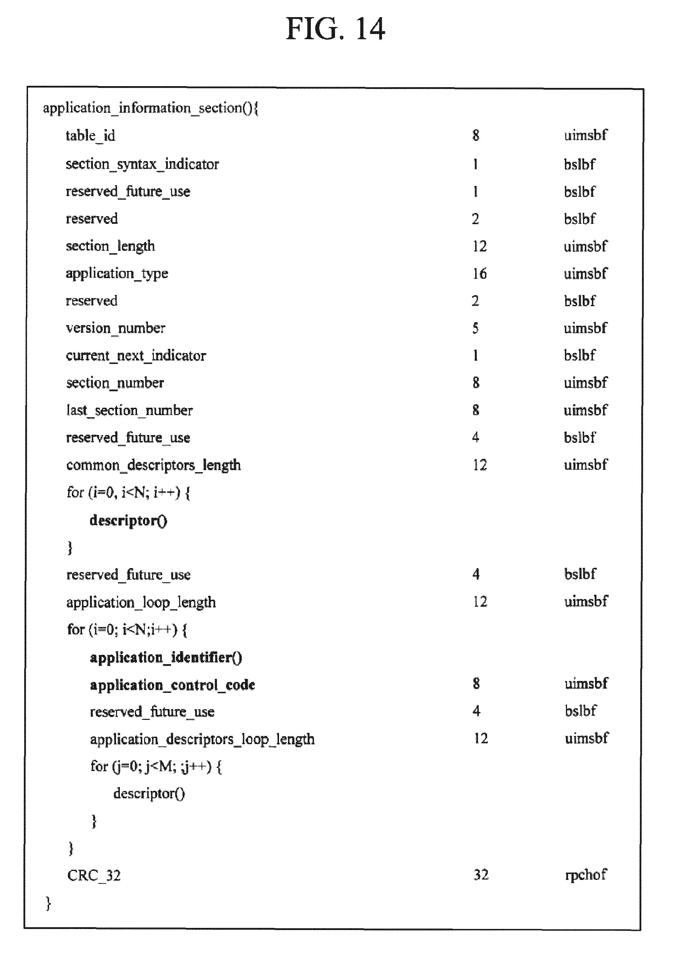

FIG. 14 is a diagram illustrating an example in which a control code is described in the AIT.
In the example shown in FIG. 14, in order to set a control code, application_information_section(), which is a descriptor defined by the ARIB STD-B23, is partially redefined.
As shown in FIG. 14, application_identifier that is a descriptor for specifying an application identifier, and application_control_code that is data for specifying a control code are newly added to the descriptor application_information_section(). The data structure of application_identifier is similar to that shown in FIG. 12. Additionally, a value set to application_control_code is similar to that shown in FIG. 13.

Here, in the above example, a policy level and a control code are described in the same table that is the PMT, the AIT, or the EIT. However, a policy level and a control code may be described in different tables. For example, a policy level may be described in the EIT, and a control code may be described in the AIT. Alternatively, a policy level may be described in PMT, and a control code may be described in the AIT.

In a case where a control code is set to a broadcast signal, the receiving device 4 controls the state of an application based on the control code set to the broadcast signal.

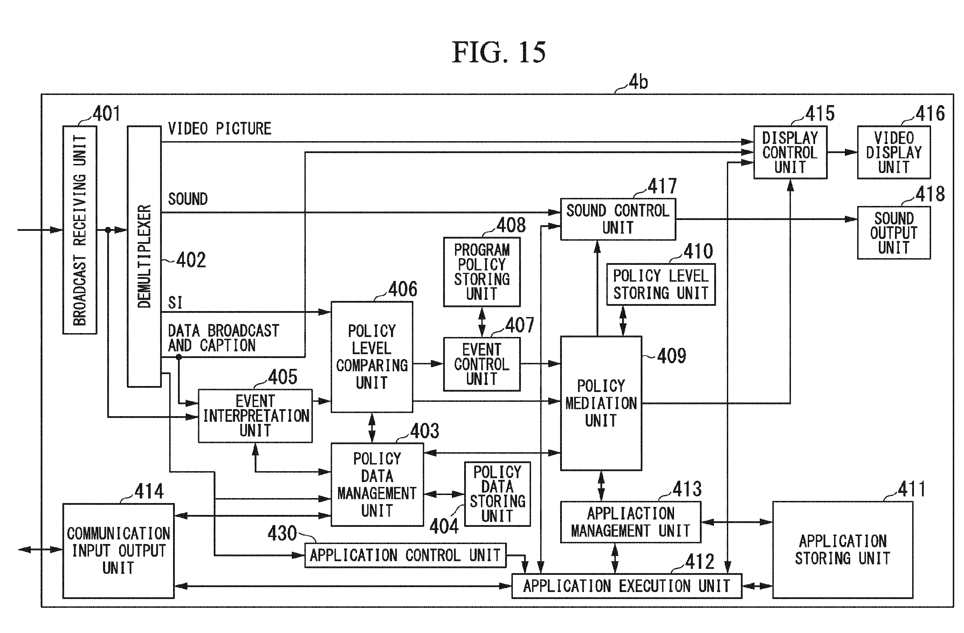

FIG. 15 is a block diagram illustrating an internal configuration of a receiving device 4b in a case where the state of an application is controlled based on a control code. In FIG. 15, the same reference numerals as used for the receiving device 4 shown in FIG. 4 are appended to like blocks, and explanations thereof are omitted here. As shown in FIG. 15, the receiving device 4b differs from the receiving device 4 shown in FIG. 4 in that the receiving device 4b further includes an application control unit 430.

The application control unit 430 reads an application identifier and a control code from the PMT, the AIT, or the EIT included in a broadcast signal, and performs a process indicated by the read control code on an application identified by the read application identifier. For example, in a case where the control code indicating a force-quit of all applications (identification name "KILL ALL") is set to the PMT, the AIT, or the EIT which is included in the broadcast signal, the application control unit 430 quits all the applications being executed by the application execution unit 412.
Thus, in a case where an emergent event occurs, a broadcasting organization gives, by means of a broadcast signal, an instruction to terminate all the currently running applications, thereby making it possible to display only a window for content (broadcast program).

Additionally, in the above embodiment, {"broadcasting organization providing application", "certified application"} is used as an application attribute indicated by the authority data. However, for example, {"formal application", "informal application"} may be used as an application attribute. Further, an informal application is an application not authorized by a system manager. Here, a formal application is also referred to as an already-authorized application, a certified application, an authorized application, an A (authorized)-type application, or an A-application. Additionally, an informal application is also referred to as a general application, a non-authorized application, a non-certified application, a U (unauthorized)-type application, or a U-application.

In a case where a digital signature added to an application is successfully authenticated, the application management unit 413 generates authority data indicating a formal application. In a case where a digital signature is not added to an application, the application management unit 413 generates authority data indicating an informal application.

Additionally, in the above embodiment, the receiving device 4 determines an outputting method in accordance with a policy level, but may determine an outputting method in accordance with the attribute of the running application. In this case, the broadcast sending device 2 sets to a broadcast signal, data indicating an outputting method associated with each attribute, and transmits the broadcast signal. For example, in a case where data indicating a window displaying method is transmitted by means of a broadcast signal, the broadcast sending device 2 sets to the broadcast signal, display control data in which display control information is added to each attribute of an application (such as {formal application 1, informal application 0}). The display control data is described in PMT (program map table), the EIT, or AIT (application information table). The display control information is data indicating a method of displaying a broadcast window and an application window.

Here, in the above example, an outputting method associated with each attribute of an application is individually set and transmitted. However, an outputting method common to all the applications may be transmitted without specifying attributes of the applications. Further, the attribute of an application may be single. Moreover, a list of outputting methods associated with respective attributes may be prepared by the receiving device 4 side, so that data for specifying any one of the outputting methods is set to a broadcast signal to be transmitted.

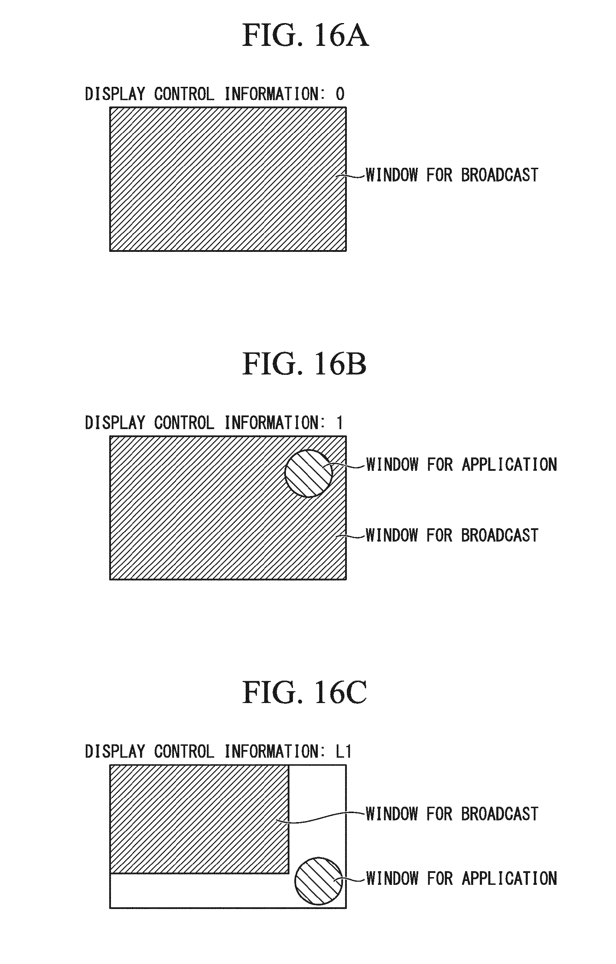

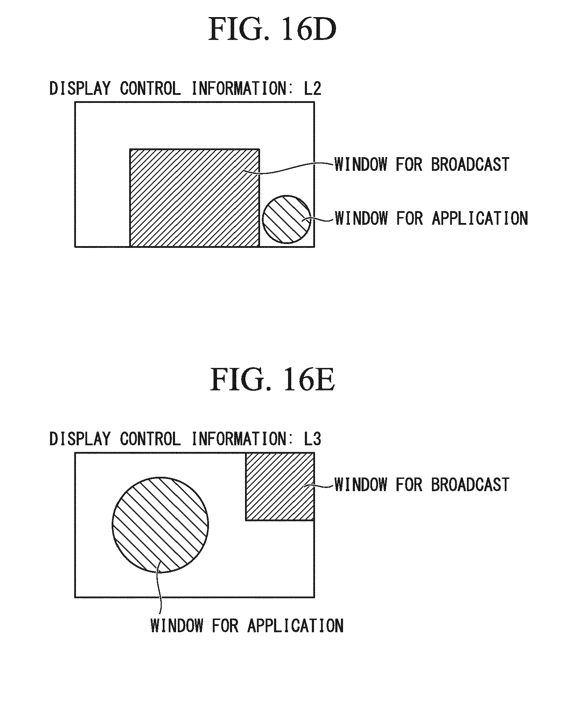

Each of FIGS. 16A to 16E is a diagram illustrating an example of a window displaying method in accordance with the attribute of an application. FIGS. 16A to 16E show the relationship between two windows that are a broadcast window and an application window.

As shown in FIG. 16A, in a case where display control information is "0", only a full-screen display of a broadcast window is allowed.
As shown in FIG. 16B, in a case where display control information is "1", an application window is allowed to be displayed. Additionally, the application window is allowed to be overlay-displayed on a broadcast window.

As shown in FIGS. 16C to 16E, in a case where display control information is "L1", "L2", or "L3", an application window is allowed to be displayed. However, the application window is prohibited from being overlay-displayed on a broadcast window, and is only allowed to be displayed outside the broadcast window.

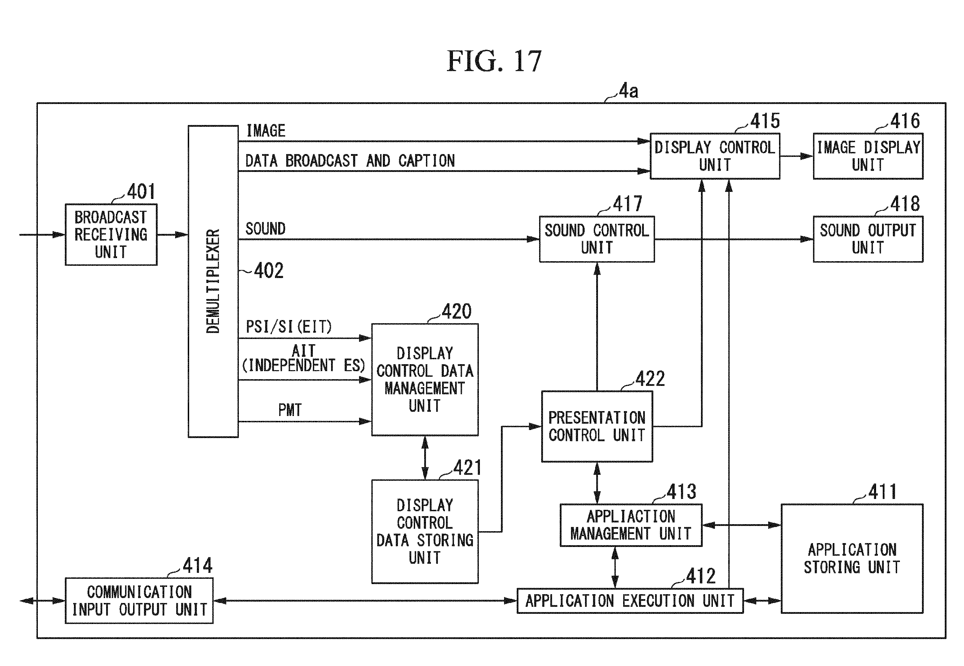

FIG. 17 is a block diagram illustrating an internal configuration of the receiving device 4a in a case where a window displaying method is determined in accordance with the attribute of an application. In FIG. 17, the same reference numerals as those appended to the blocks of the receiving device 4 shown in FIG. 4 are appended to like blocks, and explanations thereof are omitted here. As shown in FIG. 17, the receiving device 4a differs from the receiving device 4 shown in FIG. 4 in that the receiving device 4a includes a display control data management unit 420, a display control data storing unit 421, and a presentation control unit 422, in lieu of the policy data management unit 403, the policy data storing unit 404, the event interpretation unit 405, the policy level comparing unit 406, the event control unit 407, the program policy storing unit 408, the policy mediation unit 409, and the policy level storing unit 410.

The demultiplexing unit 402 demultiplexes the broadcast signal demodulated by and output from the broadcast receiving unit 401 into various data, such as PMT, video picture, sound, caption, data broadcast, PST (program specific information)/SI (service information), and AIT transmitted by independent elementary stream (ES). Here, the AIT is included in data broadcast in some cases.

The display control data management unit 420 reads display control data from the PMT, the EIT, or the AIT which is demultiplexed by the demultiplexing unit 402. Then, the display control data management unit 420 writes the read display control data in the display control data storing unit 412. Additionally, upon newly receiving display control data, the display control data management unit 420 updates the display control data stored in the display control data storing unit 421 with the received display control data.
The display control data storing unit 412 stores display control data.
The presentation control unit 422 reads from the display control data stored in the display control data storing unit 421, display control information associated with the attribute of the application being executed by the application execution unit 412. Then, the presentation control unit 422 outputs to the display control unit 415, a method of displaying a window for the read display control information.

### [6. Effects]

According to the above embodiment, in the receiving device, a method of displaying windows for broadcast and application and a method of outputting sound thereof are determined for each broadcast program or for each event that occurs in non-synchronization with the broadcast program. In the related art, control information for determining a method of displaying content is associated with each program. For this reason, regarding emergent or breaking information, such as an earthquake emergency warning or breaking news, which is delivered irrespective of a program, it has been impossible to control a display of such information with another content. According to the present embodiment, regarding not only information to be delivered for each broadcast program, but also emergent or breaking information to be delivered irrespective of the contents of a program, it is possible to control a method of displaying windows for broadcast and application and a method of outputting sound thereof.

Additionally, according to the above embodiment, in the receiving device, the attribute of each application is managed, and in accordance with that attribute, a method of displaying windows for broadcast and application and a method of outputting sound thereof are determined. Thus, a provider that delivers a broadcast program (broadcasting organization) can control a method of displaying windows for broadcast and application and a method of outputting sound thereof, in accordance with the attribute of an application provider or the like.

Further, according to the above embodiment, in the receiving device, program control information multiplexed with a digital broadcast signal is analyzed to retrieve the attribute of a program. Then, a window displaying method and a sound outputting method are determined in accordance with the program structure by referring to information defining, for each attribute of a program, a method of displaying windows for a broadcast and an application and a method of outputting sound thereof. Thus, a display of windows and an output of sound are controlled using the attribute of a program multiplexed with the broadcast signal, thereby enabling control for each program without improving transmitting facilities on the broadcasting organization side.

Moreover, according to the above embodiment, in the receiving device, a digital broadcast signal is analyzed to retrieve an event that occurs in non-synchronization with a broadcast program. Then, a window displaying method and a sound outputting method are determined in accordance with the occurrence and the end of the event by referring to information defining, for each type of event, a method of displaying windows for a broadcast and an application and a method of outputting sound thereof. Thus, a display of windows and an output of sound can be controlled for each event without improving transmitting facilities on the broadcasting organization side.

Additionally, according to the above embodiment, in the receiving device, the information defining, for each attribute of a program, a method of displaying windows for a broadcast and an application and a method of outputting sound thereof, the information defining, for each type of event, a method of displaying windows for a broadcast and an application and a method of outputting sound thereof, and the digital broadcast signal is analyzed, thereby updating, by broadcasting or communication, a program for retrieving an event that occurs in non-synchronization with a broadcast program. Thus, in a case where a method of controlling a display of windows and an output of sound is required to be changed due to circumstances of a broadcasting organization, it is possible to easily deliver that change to the receiving device.

As explained above, according to the above embodiment, in the receiving device supporting cooperative communication/broadcasting services, a method of displaying windows for a broadcast and an application and a method of outputting sound thereof are controlled in accordance with a broadcast program or an event that occurs independently of a broadcast program. Thus, it is possible to display a window and output sound based on the intent of a broadcasting organization. Accordingly, an application window is prevented from being overlay-displayed on a broadcast window which is caused by an arrangement against the performance intent of a program producer, and application sound is prevented from being outputted while being mixed with the broadcast sound. Additionally, another effect is expected such that a viewer will not confuse whether the content being displayed by the receiving device is content being provided by broadcasting or content being displayed by an application. Further, even when breaking information, such as an earthquake emergency warning, is broadcast, control is available so as to prevent an application window from being overlay-displayed on a broadcast window, thereby enhancing the reliability of communication of information to viewers. Moreover, it is possible to implement the functions of the present embodiment only by adding functions on the receiving device side. Therefore, another effect is expected such that no cost is required for improving broadcast sending facilities.

### [7. Others]

Here, in the above embodiment, a greater value of data is used to represent the higher policy level. As long as the order of levels of policy levels can be represented, however, another data format may be used.

Each of the above broadcast sending device 2, the data management device 3, the receiving device 4, and the content delivery device 5 includes a computer system. Additionally, a computer-readable recording medium stores, in program format, operational steps to be performed by the broadcast sending device 2, the data management device 3, the receiving device 4, and the content delivery device 5. The above steps are executed by the computer system reading and executing that program. Here, the computer system includes a CPU, various memories, an OS, and hardware such as a peripheral equipment.

Additionally, the "computer system" includes home page provision environments (or display environments) in a case where a WWW system is used.
Further, the "computer-readable recording medium" refers to a storing unit such as portable media like a flexible disk, a magneto-optical disk, a ROM, or a CD-ROM, and a hard disk built in the computer system. Moreover, the "computer-readable recording medium" may also include: a medium which stores a program dynamically and temporarily, such as a communication line when the program is transmitted via a network such as the Internet or a communication line such as a telephone line; and a medium which stores the program for a certain period of time such as a volatile memory included in a computer system functioning as a server or a client in this case. Also, the aforementioned program may be a program which implements part of the aforementioned functions, or a program which may implement the aforementioned functions in combination of another program already stored in the computer system.

### INDUSTRIAL APPLICABILITY

The present invention is applicable to a receiving device, a broadcasting system, a program, and the like, which can control a display of windows for content and applications without delivering control information for each content to be broadcast.

### DESCRIPTION OF REFERENCE NUMERALS

1: transmitting device
2: broadcast sending device
21: broadcast transmitting unit
22: instruction receiving unit
3: data management device
31: input unit
32: transmitting unit
33: instructing unit
4, 4a, 4b: receiving device
402: demultiplexing unit
403: policy data management unit
404: policy data storing unit
405: event interpreting unit
406: policy comparing unit
407: event control unit
408: program policy storing unit
409: policy mediation unit
410: policy level storing unit
411: application storing unit
412: application execution unit
413: application management unit
414: communication input output unit
415: display control unit
416: video display unit
417: sound control unit
418: sound output unit
420: display control data management unit
421: display control data storing unit
422: presentation control unit
430: application control unit
5: content distribution device

## Claims

1. A receiving device comprising:
a policy data storing unit configured to store a policy level table and an output determination table, the policy level table indicating, for each content, a policy level representing a level of a method of displaying windows for a broadcast and an application, and the output determination table indicating, for each policy level, a method of displaying windows for a broadcast and an application;
an application execution unit configured to execute an application;
a broadcast receiving unit configured to receive a broadcast signal;
a policy level comparing unit configured to read from the policy level table stored in the policy data storing unit, a policy level associated with the content included in the broadcast signal received by the broadcast receiving unit; and
a policy mediation unit configured to read from the output determination table stored in the policy data storing unit, the method of displaying the windows associated with the policy level read by the policy level comparing unit, and instruct, in accordance with the read method of displaying the windows, to display a window for the content included in the broadcast signal and a window for the application being executed by the application execution unit.

2. The receiving device according to claim 1, wherein the content is general content to be broadcast in accordance with a predetermined schedule,
the policy level comparing unit is configured to receive data indicating broadcast start time of the general content, and read a policy level associated with the general content from the policy level table, and
the policy mediation unit is configured to change, at the broadcast start time indicated by the data received by the policy level comparing unit, the policy level present before the broadcast start time to the policy level of the general content associated with the data indicating the broadcast start time.

3. The receiving device according to claim 1, wherein the content is emergent content to be broadcast in non-synchronization with general content to be delivered in accordance with a predetermined schedule,
the receiving device further comprises:
an event interpretation unit configured to detect that emergent content is included in the broadcast signal, and output an occurrence of the emergent content to the policy level comparing unit,
wherein the policy level comparing unit is configured to read from the policy level table stored in the policy data storing unit, a policy level associated with the emergent content, the occurrence of which is detected by the event interpretation unit.

4. The receiving device according to claim 1, wherein the content is any one of general content to be broadcast in accordance with a predetermined schedule and emergent content to be broadcast in non-synchronization with the general content,
the receiving device further comprises:
an event interpretation unit configured to detect that emergent content is included in the broadcast signal, and output an occurrence of the emergent content to the policy level comparing unit,
wherein the policy level comparing unit is configured to read from the policy level table, a policy level associated with the general content included in the broadcast signal, and read from the policy level table, a policy level in association with the emergent content in a case that the event interpretation unit detects an occurrence of the emergent content, and
the policy mediation unit is configured to read from the output determination table, a method of displaying windows associated with the policy level of the general content in a case that the emergent content is not occurring, and the policy mediation unit is configured to, in a case that the emergent content is occurring, read from the output determination table, a method of displaying windows associated with the policy level of the emergent content, or compare the policy level of the emergency content and the policy level of the general content, read from the output determination table a method of displaying windows associated with a greater one of the compared policy levels, and instruct, in accordance with the read method of displaying windows, to display a window for the content included in the broadcast signal and a window for the application being executed by the application execution unit.

5. The receiving device according to any one of claims 1 to 4, further comprising:
a policy data management unit configured to obtain from the broadcast signal received by the broadcast receiving unit, an output determination table transmitted in a section system, engineering service, or a data carousel system, and write the output determination table in the policy data storing unit.

6. The receiving device according to claim 4, wherein the policy level comparing unit is configured to read a policy level from the broadcast signal in a case that a policy level is set to the broadcast signal, and
the policy mediation unit is configured to, in a case that the emergent content is not occurring and a policy level is set to the broadcast signal, read from the output determination table, a method of displaying windows associated with the policy level set to the broadcast signal, and the policy mediation unit is configured to, in a case that the emergent content is not occurring and a policy level is not set to the broadcast signal, read from the output determination table, a method of displaying windows associated with the policy level of the general content, and instruct, in accordance with the read method of displaying windows, to display a window for the content included in the broadcast signal and a window for the application being executed by the application execution unit.

7. The receiving device according to claim 4, wherein the policy level comparing unit is configured to read the policy level from any one of a program map table, an application information table, and an event information table, and
the policy mediation unit is configured to arrange the program map table, the application information table, and the event information table in this order that is a descending order of priority thereof, and the policy mediation unit is configured to, in a case that the emergent content is not occurring and the policy level comparing unit reads the policy level from two or more different tables included in the broadcast signal, read from the output determination table, a method of displaying windows associated with the policy level of the table with high priority, and instruct, in accordance with the read method of displaying windows, to display a window for the content included in the broadcast signal and a window for the application being executed by the application execution unit.

8. The receiving device according to claim 4, further comprising:
a communication input output unit configured to transmit and receive data via a network; and
a policy data management unit configured to obtain from the broadcast signal received by the broadcast receiving unit, storing destination information that specifies an output determination table storing device to be connected to the network, and write in the policy data storing unit, the output determination table that the communication input and output unit receives from the output determination table storing device specified by the storing destination information.

9. The receiving device according to claim 8, wherein the policy data storing unit is configured to further store version data of the output determination table,
the version data of the output determination table is added to the storing destination information, and
the policy data management unit is configured to, in a case that the version data of the output determination table obtained from the broadcast signal indicates a version newer than indicated by the version data stored in the policy data storing unit, update the output determination table and the version data which are stored in the policy data storing unit with the output determination table that the communication input and output device receives from the output determination table specified by the storing destination information, and the version data added to the storing destination information.

10. The receiving device according to claim 1, further comprising:
a policy data management unit configured to write in the policy data storing unit, an output determination table obtained from the broadcast signal received from the broadcast receiving unit, or an output determination table received by a communication unit configured to receive data transmitted via a network.

11. The receiving device according to claim 10, wherein the policy data storing unit is configured to further store version data,
version data is added to the output determination table, and
the policy data management unit is configured to, in a case that the version data added to the output determination table obtained from the broadcast signal or the output determination table received by the communication unit indicates a version newer than indicated by the version data stored in the policy data storing unit, update the output determination table and the version data which are stored in the policy data storing unit with the output determination table obtained from the broadcast signal or the output determination table received by the communication unit, and the version data added to the output determination table.

12. The receiving device according to claim 1, further comprising:
an application control unit is configured to, in a case that a control code indicating a force-quit of all applications is set to the broadcast signal received by the broadcast receiving unit, terminate all the applications being executed by the application execution unit.

13. A broadcasting system comprises:
a transmitting device configured to transmit a broadcast signal; and
a receiving device configured to receive the broadcast signal,
wherein the transmitting device comprises:
a broadcast transmitting unit configured to transmit a broadcast signal including content,
the receiving device comprises:
a policy data storing unit configured to store a policy level table and an output determination table, the policy level table indicating, for each content, a policy level representing a level of a method of displaying windows for a broadcast and an application, and the output determination table indicating, for each policy level, a method of displaying windows for a broadcast and an application;
an application execution unit configured to execute an application;
a broadcast receiving unit configured to receive a broadcast signal;
a policy level comparing unit configured to read from the policy level table stored in the policy data storing unit, a policy level associated with the content included in the broadcast signal received by the broadcast receiving unit; and
a policy mediation unit configured to read from the output determination table stored in the policy data storing unit, the method of displaying the windows associated with the policy level read by the policy level comparing unit, and instruct, in accordance with the read method of displaying the windows, to display a window for the content included in the broadcast signal and a window for the application being executed by the application execution unit.

14. A program causing a computer of a receiving device to function as:
a policy data storing unit configured to store a policy level table and an output determination table, the policy level table indicating, for each content, a policy level representing a level of a method of displaying windows for a broadcast and an application, and the output determination table indicating, for each policy level, a method of displaying windows for a broadcast and an application;
an application execution unit configured to execute an application;
a broadcast receiving unit configured to receive a broadcast signal;
a policy level comparing unit configured to read from the policy level table stored in the policy data storing unit, a policy level associated with the content included in the broadcast signal received by the broadcast receiving unit; and
a policy mediation unit configured to read from the output determination table stored in the policy data storing unit, the method of displaying the windows associated with the policy level read by the policy level comparing unit, and instruct, in accordance with the read method of displaying the windows, to display a window for the content included in the broadcast signal and a window for the application being executed by the application execution unit.
